# EUROPEAN PATENT SPECIFICATION

(11) **EP 2 843 399 B1**
(45) Date of publication and mention of the grant of the patent: **16.01.2019**
(21) Application number: 13781346.5
(22) Date of filing: 25.04.2013
(51) Int. Cl.: G01N 27/62, G06F 17/30

(54) **SYSTEM WHICH PROVIDES CONTENT**
INHALTBEREITSTELLUNGSSYSTEM
SYSTÈME QUI FOURNIT DU CONTENU

(30) Priority: 25.04.2012 JP 2012100141
(43) Date of publication of application: 04.03.2015
(73) Proprietor: Atonarp Inc., Tokyo 105-0012 (JP)
(72) Inventor: MURTHY, Prakash Sreedhar, Tsukuba-shi, Ibaraki 305-0047 (JP)
(74) Representative: Körber, Martin Hans
(86) International application number: PCT/JP2013/002833
(87) International publication number: WO 2013/161315

(56) References cited:
- WO-A1-2012/029312
- WO-A2-03/054549
- US-A1- 2009 055 389
- MICHIKO UEBORI ET AL.: 'Study on Mass Spectral Database Obtained by Liquid Chromatography/Mass Spectrometry for Retrieval System of Chemicals' JOURNAL OF JAPAN SOCIETY FOR ANALYTICAL CHEMISTRY vol. 54, no. 3, 05 March 2005, pages 211 - 219, XP055169392
- S. BELL ET AL.: 'Classification of ion mobility spectra by functional groups using neural networks' ANALYTICA CHIMICA ACTA vol. 394, no. 2-3, 09 August 1999, pages 121 - 133, XP002643002

## Description

### TECHNICAL FIELD

The present invention relates to a system and method that provide content in response to spectrum data, such as data including waveform components of chemical substances.

### BACKGROUND ART

In recent years, apparatuses called field asymmetric waveform ion mobility spectrometers (FAIMS) have appeared as a technology for detecting and analyzing chemical substances with high sensitivity. In such an apparatus, by changing the DC voltage and the AC voltage applied to sensors, it is possible to detect changes in the mobility of ionized chemical substances using a fine filter and to output data relating to chemical substances based on the differences in such detection results.

WO2006/013396 discloses an ion mobility spectrometer with an ion filter in the form of at least one ion channel that includes a plurality of electrodes. With this ion mobility spectrometer, it is possible for the filler to selectively input ion types according to the potential applied to the conductive layer that changes over time. Such potential has a drive electric field component and a transverse electric field component, and in a preferred embodiment, the respective electrodes contribute to the generation of both the drive electric field component and the transverse electric field component. Such device can be used even without a drift gas flow. In addition, such publication discloses a micromachining technology for manufacturing a microscale spectrometer for the various applications of a spectrometer.

### DISCLOSURE OF THE INVENTION

A technology called "context awareness" has also been proposed. One of the several definitions and meanings of context awareness refers to digitization technologies and related concepts where computers operate in the background without human involvement to actively collect and process data on a huge amount of events in the world using information from various types of sensor and/or image information or the like. In recent years, there has been demand for specific methods of realizing context awareness.

One aspect of the present invention is a system that provides, in response to a search request including spectrum data obtained from a sensor, content including context information that is estimated from the spectrum data. Such system is defined in claim 1.

By the system, it is possible to analyze spectrum data (spectroscopic data), which is data reflecting a variety of factors, to calculate scores of the stocked spectrum data, and, in high-order of rankings of the stocked spectrum data for the context information, to provide a user with content associated with the context information relating to the spectrum data.

The sensor may be a sensor that outputs spectrum data such as an image sensor, an audio sensor, a touch sensor, an analyzer apparatus, for example, chromatography, a mass analyzer, an ion mobility sensor, a spectroscopic analyzer apparatus (Infrared spectroscopy, Raman spectroscopy, near infrared spectroscopy, NMR), or a biological information monitor, such as an ECG monitor, a breath monitor, a brain wave detector, MRI or CT, with it being possible to use one or a plurality of sensors and for the sensor type to be a single type or a plurality of types. Also, the domain type of the spectrum data obtained by the sensor is not limited to a certain time, frequency, wavelength, voltage, or the like and may be a plurality of domains.

The context information includes a wide range of information collected by such sensors and as examples includes information that is directly or indirectly detected, or information that should be detected, by a sensor and information where appropriate processing, such as recognition processing and an editing/reducing process, has been carried out on the information (data) acquired by sensors. As examples, the context information may be information produced by image recognition; information produced by sound recognition, information relating to chemical substances recognized by an analyzer apparatus, biological information, and the like, and may include information of a plurality of different types.

The content associated with the context information may be content in which the context information is included, content that is closely related to the context information, content that has the context information as the background, or the like. The content may be information that is experienced by the five senses (sight, hearing, touch, taste, and smell) and as examples may be text, images, sound, smells, virtual reality, and the like, and may be a variety of information such as information relating to fields like science, politics, culture, medicine, food and clothing. The content to be outputted may be limited to certain users (clients) or may be unlimited.

It is desirable for the system to include: a unit acquiring information on content selected by the client (user, viewer, source of the search request, terminal side, terminal owner) out of the content included in the output data; and an updating unit that adds the obtained spectrum data to the database having assigned a ranking to the context information associated with the selected content. By adding the newly obtained spectrum data to the database after assigning a ranking, it is possible to reflect the evaluation of the newly obtained spectrum data when searching for spectrum data the next time. The rankings of the spectrum data and the context information in the database may be variable or may be 0-100 (1-0, on/off). In the case of on/off, there are cases where the stocked spectrum data (golden data) that is linked to the context information is updated.

It is desirable for the database to include characteristic values of the stocked spectrum data, and for the comparison unit to include a function that assigns rankings to the characteristic values included in the obtained spectrum data and calculates the score from (in order) a characteristic value with a high ranking. It is possible to compare the obtained spectrum data and the stocked spectrum data based on the characteristic values and calculate the score.

In a case where the search request includes periphery information including environmental conditions acquired with the obtained spectrum data (at the time when the obtained spectrum data was acquired), it is desirable for the comparison unit to include a function that corrects at least one of the characteristic values of the obtained spectrum data and the characteristic values of the stocked spectrum data according to the periphery information, or a function of selecting the spectrum data to be compared out of the stocked spectrum data. By correcting (compensating) the characteristic values of the spectrum data using the periphery information, it is possible to improve the precision of comparisons. Also, by limiting the objects to be compared using periphery information, for example the application currently running or acquired image information, it is possible to improve the precision of comparisons.

It is also desirable, in a case where the database includes information that assigns rankings to the plurality of context information for at least one of the environmental conditions, for the unit that outputs, the output unit of the system, to include a unit that generates the output data so that content associated with the context information is selectable at the client in descending order of the overall evaluation that includes the ranking for the environmental conditions. The environmental conditions include one or a plurality of information such as temperature, humidity, air pressure, weather, other climate conditions, indoor/outdoor position, application operating on a terminal, or conditions in a range that can be imagined from such information. By selecting high-order context information based on the overall evaluation including such information, it is possible to provide content that is much closer to the content desired by the client.

The spectrum data (spectroscopic data) is typically measurement data that is two-dimensional or multidimensional with three or more dimensions. A typical example of spectrum data is data produced by measuring changes of current of the ion passed when molecules of the measured object are ionized and passed together with air through a gap to which an asymmetrical electric field is applied and conditions of the applied electric field are changed. Typical information included in the context information obtained by an ion mobility sensor is chemical substance-related information such as smells (odors).

This system may be installed in a mobile device such as a terminal and may be a system that is fixed or semi-fixed such as a server or a data center connected to a terminal via a computer network. A system that uses a server includes a unit that receives the search request from a terminal equipped with the sensor, wherein the unit that outputs includes a unit that transmits the data for outputting the content in series to the terminal that is a source of the search request. The unit that outputs may include a unit that outputs data for outputting the content selected by the client to the client terminal.

Yet another aspect of the present invention is a method according to claim 9.

It is desirable for the providing content to further include the following steps.
- Acquiring information on content selected by the client out of the content included in the output data.
- Adding the obtained spectrum data to the database having assigned a ranking to the context information associated with the selected content (re-ranking process).

It is desirable for the database to include characteristic values of the stocked spectrum data, and for the score calculating process to include assigning rankings to the characteristic values included in the obtained spectrum data and calculating the score from a characteristic value with a high ranking (horizontal ranking process).

It is desirable for the search request to include periphery information including environmental conditions acquired with the obtained spectrum data. It is also desirable for the score calculating process to include correcting at least one of the characteristic values of the obtained spectrum data and characteristic values of the stocked spectrum data according to the periphery information, or selecting the spectrum data to be compared out of the stocked spectrum data.

In addition, it is effective for the database to include in advance information that assigns rankings to the plurality of context information for at least one of the environmental conditions, and for the outputting (vertical ranking process) to include generating the output data so that content associated with the context information is selectable at the client in descending order of the overall evaluation that further includes the ranking for the environmental conditions.

### BRIEF DESCRIPTION OF THE DRAWINGS

FIG. 1 is a block diagram showing a chemical substance analyzing system.
FIG. 2 is a block diagram showing a configuration of an OLP.
FIG. 3 is a graph showing an example of measurement data of a FAIMS apparatus.
FIG. 4 is a general flowchart showing an overview of an analyzing method (analyzing process).
FIG. 5 is a flowchart showing the details of the peak characterizing process.
FIG. 6 is a flowchart showing the details of a separation process for peak waveforms.
FIG. 7 is a diagram showing an example of the separation process for peak waveforms shown in FIG. 6.
FIG. 8 is a flowchart showing the details of a detection process for continuity of peak characteristics.
FIG. 9 is a flowchart showing the details of a grouping process for chemical substance peaks.
FIG. 10 is a flowchart showing the details of a peak grouping process for reactants.
FIG. 11 is a flowchart showing the details of a peak grouping process for target chemical substances.
FIG. 12 is a flowchart showing the details of the base database creation process for target chemical substances.
FIG. 13 is a diagram showing the configuration of the base database of chemical substances.
FIG. 14 is a flowchart showing the details of the horizontal ranking process.
FIG. 15 is the horizontal ranking table.
FIG. 16 is a flowchart showing the ion current correction process.
FIG. 17 is a flowchart showing the calculation process for ion mobility.
FIG. 18 is a data example of an empirical model of a sensor device.
FIG. 19 is an example transfer function of a sensor device.
FIG. 20 is examples of chemical substance measurement result databases (primary (base) and secondary).
FIG. 21 is a flowchart showing the identification process for chemical substances.
FIG. 22 is an example of a characteristic data matrix for chemical substances.
FIG. 23 is an example of a characteristic data matrix of reference chemical substances.
FIG. 24 is a correspondence chart for characteristic data matrices (1).
FIG. 25 is a correspondence chart for characteristic data matrices (2).
FIG. 26 is the database configuration of the golden data.
FIG. 27 is a diagram useful in explaining a vertical ranking process.
FIG. 28 is an updating process of a database.
FIG. 29 is an example of where ion mobility characteristics are extracted.
FIG. 30 is ion mobility characteristics (positive ion current).
FIG. 31 is ion mobility characteristics (negative ion current).
FIG. 32 is a diagram useful in explaining the identification process for chemical substances.
FIG. 33 is the general flow according to a second embodiment.
FIG. 34 is the general flow according to a third embodiment.
FIG. 35 is the general flow according to a fourth embodiment.

### DETAIL DESCRIPTION

An apparatus equipped with a FAIMS, which is one example of an ion mobility sensor, as a sensor is described in more detail below as an example. With FAIMS (Field Asymmetric Ion Mobility Spectrometry), it is possible to detect an ion current that changes in accordance with two variables that are a Vd voltage (dispersion voltage or electric field voltage (Vd), alternating current) and a Vc voltage (compensation voltage, direct current). Since the waveform (spectrum data, spectroscopic data) SD of the detected ion current includes waveforms that are unique to chemical substances, it is possible to carry out the specifying of chemical substances. The obtained data SD is three dimensional data that includes values of the ion currents. Depending on the characteristics of the chemical substances, by changing the Vc voltage when the Vd voltage has been fixed, for example, a peak or sometimes a plurality of peaks will be formed in the ion current value due to the characteristics of the ion mobility of the chemical substances being measured.

The data SD obtained by a FAIMS (FAIMS apparatus, FAIMS sensor) includes ion currents including peaks (waveforms) with two-dimensional data as parameters, and as a whole is three-dimensional data. The data SD obtained from a single chemical substance also includes a plurality of peaks. For this reason, in the same way as other analyzer apparatuses such as gas chromatography, proficiency of the analyzer technology is necessary and it is not possible to easily draw conclusions from the analysis results.

Also, with a FAIMS, there are many cases where measurement is carried out in an environment in which normal air is present, so that it is possible for other unexpected chemical substances to be present in the mixture. In such case, there can be cases where, due to the influence of the other chemical substances that are mixed in, the characteristics that will normally be exhibited by the intended chemical substance will not be obtained so that the measurement results may be erroneously determined. In addition to the mixing in of other chemical substances, the effects of other environmental conditions, such as temperature, humidity, air pressure, and air flow, cannot be avoided.

The following describes the present invention with two-dimensional data SD or multidimensional data SD obtained from a FAIMS as typical examples of spectrum data obtained (the obtained spectrum data) from a sensor. Characteristics of ion currents are included in the data SD. One characteristic is the peaks included in the data SD, with it being possible to specify such peaks from the correlation between adjacent data for a parameter on a certain dimension. It can be assumed that one factor causing a specified peak out of such peaks to be derived is a specified group of chemical substances. If the sensor used to detect a characteristic of grouped chemical substances, and more specifically a measurement value of ion mobility has unique characteristics, by correcting for the influence of such sensor characteristics and also for the influence of environmental conditions and the like that do not depend on the sensor (such as temperature and humidity), it is possible to exclude such influences and possible to find what are the original characteristics of a specified chemical substance.

More specifically, it is possible to investigate the correlation between peaks in the ion current appearing when the Vc voltage is changed for a certain Vd voltage and peaks for an adjacent voltage Vd, to determine whether such peaks are derived from the same chemical substance, and to group the peaks appearing in the measurement results for each chemical substance deriving the peaks. The correlation with the peaks in the adjacent ion currents is judged by considering not only the location where the peaks appear, the peak widths, and the peak values, but also the theoretical characteristics and the like of the ionized substance. In addition, by referring to the ionization energy value of the substances present in the measurement system and correcting the part that depends on the characteristics of the FAIMS sensor used for measurement out of the characteristics (measurement values) of the measured chemical substances, more accurate ion current values are found.

In addition, by correcting for the influence of environmental conditions, such as temperature, humidity, pressure, and air flow that do not depend on the characteristics of the FAIMS sensor, more accurate ion current values are calculated. By doing so, it is possible to specify (identify) the target chemical substances with higher precision. The reference data referred to when identifying the measuring chemical substances is also subjected to a compensation process for the same environmental conditions as the measured substances and, if the measurement results are reliable, an updating process is carried out for the reference data by replacing some or all of the reference data with some or all of such results.

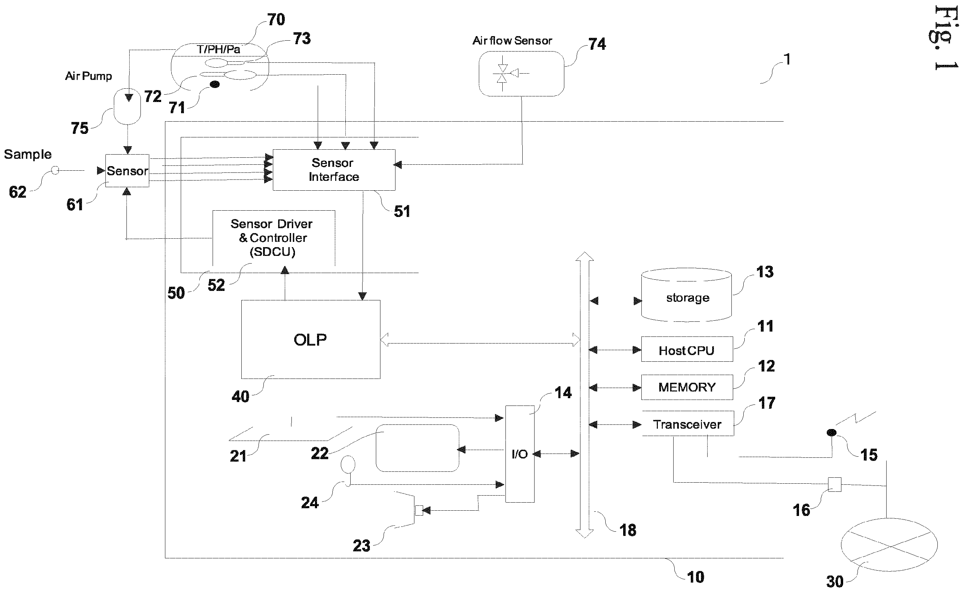

FIG. 1 is a block diagram showing a system that analyzes chemical substances and outputs results. The system 1 is typically realized as a system 1 that is centered on a notebook-type personal computer 10. The personal computer (PC) 10 includes a CPU 11, a suitable memory 12, storage 13 such as a hard disk drive, a local input/output interface 14 that provides a user interface, a communication interface (transceiver) 17 for exchanging data with an outside (external) appliance via a wireless LAN 15 or a wired LAN 16 for example, and a bus system 18 that connects such components. An input appliance such as a keyboard 21, an image output appliance such as a liquid crystal display 22, an audio output appliance such as a speaker 23, and an appliance that obtains audio information such as a microphone 24 are connected to the local input/output interface 14. The system 1 may include such input/output devices or may be provided with interfaces for connecting such input/output devices.

A device (olfaction processor, OLP) 40 that includes an analyzing function for measurement data obtained from the sensor 61 is also connected to the bus 18. The OLP 40 is capable of being provided as a single integrated device (semiconductor chip) or as a plurality of integrated chips (a chipset).

The PC 10 further includes a sensor controller device 50. The sensor controller device 50 is controlled by the OLP 40 and functions so as to supply a variety of data to the OLP 40. The sensor controller device 50 includes a sensor interface 51 that is connected to various types of sensor and acquires (samples) data and a sensor driver controller unit (SDCU) 52 that is capable of changing the measurement conditions of a number of sensors.

Typical sensors 61 are sensors that detect substances (chemical substances) in air, with field asymmetric waveform ion mobility spectrometers (FAIMS) and differential mobility spectrometers (DMS) being known. A spectrometer (or sensor, hereinafter collectively referred to as "DMS") of this type inputs an ionized fluid sample (as examples, gas, liquid, or vapor) into an asymmetrical electrical field that changes from high voltage to low voltage and outputs the result of filtering such flows based on the field mobility of ions. The measurement conditions of the DMS 61 are controlled by the SDCU 52.

One example of the DMS 61 is an ion mobility mass spectrometry apparatus disclosed in PCT publication WO2006/013396 or PCT publication WO2006/013890. Such apparatuses are monolithic or micromachine-type compact mass spectrometry apparatuses, and are sufficiently portable. A plurality of sensor groups (environmental information sensor groups) 70 for measuring environmental information (environmental conditions) such as temperature and humidity are also connected to the sensor interface 51. The sensor groups 70 for measuring environmental conditions include a temperature sensor 71, a humidity sensor 72, a pressure sensor 73, and an air flow sensor 74. In addition, the sensor interface 51 includes a function for controlling an air pump 75. However, this air pump 75 is not an essential component. According to requests from an application, outside conditions, and the like, the air pump 75 is capable of forcibly supplying outside air to the sensor group 70 mentioned above for measuring environmental information and/or the DMS 61 that is an olfactory sensor. Numeral 62 is an opening for feeding gas including chemical substances to the olfactory sensor DMS 61 and feeds chemical substances to the olfactory sensor 61 by itself according to outside conditions or with assistance from an air pump 75.

The smallest unit for systems that include the OLP 40 is the device 40 (an integrated circuit chip) itself. A system that includes the OLP 40 may be the PC 10, or a water quality testing apparatus, a narcotics detecting apparatus capable of detecting minute amounts of narcotic substances, a health monitoring apparatus that investigates the state of a disease from the breath of a patient, or the like, each of which equipped with the OLP 40.

The OLP 40 is a device or apparatus that is equipped with an analyzing function and is capable of detecting (analyzing) chemical substances that cause an odor (smell, aroma) in outside air or peripheral air in real time. Information on odors plays an important role in a large number of applications relating to health and safety. The OLP 40 can equip a portable household apparatus or PC with a function (olfactory function) that outputs information on odors.

Odors are caused by chemical compounds and chemical substances such as gases that are included in peripheral air. Hereinafter, the expression "chemical substances" includes chemical compounds, molecules, and elements and also includes products without being limited to constituents and compositions. Such causes of odors can be detected by sensors such as a crystal sensor (a quartz crystal microbalance or QCM), an electro-chemical sensor, a SAW (surface acoustic wave) device, an optical sensor, gas chromatography, and a mass spectrometry apparatus. Such sensors are capable of detecting values (physical values) that change (fluctuate) due to the presence of chemical substances. Many of such sensors are bulky and complex, and are not easy to utilize in applications involving everyday use. In addition, a number of such sensors have limitations in that they are sensitive for only a small number of gases or a specified chemical substance or have a sensitivity that changes in accordance with temperature and humidity.

In recent years, investigations have been carried out into analyzer apparatuses that are capable of detecting the causes of odors and are compact and capable of being carried as described above. An analyzer device that uses ion mobility and optics (infra-red, NMR) is capable of providing a small form factor sensor in the form of a single chip and has the potential of being used in a variety of applications such as health and safety management in the home.

Such analyzer apparatuses (sensors) have wider applicability than a sensor that is sensitive to specified constituents (chemical substances) and are capable of detecting the presence and intensity (concentration) of substantially all constituents within the range that can be analyzed with substantially the same precision. However, an analyzer apparatus outputs a large amount of data suggesting the presence of chemical substances. This means that if the output data of the sensor is processed by the CPU 11 of the PC 10, unless the processing performance of the CPU 11 is excessively high, there is the risk that achieving a sense of smell will make it impossible to execute other applications and/or that the processing performance will be significantly limited. The OLP 40 is also designed to provide a solution to such inconvenience. That is, by installing the OLP 40 as a single chip in a household appliance, an extremely handy electronic terminal such as a mobile telephone, a home security appliance, or the like and not just in the system 1 based on the PC 10 as shown in FIG. 1, it is possible to economically equip devices with an olfactory function. The sensor is also not limited to an ion mobility sensor and, as mentioned earlier, may be a type of sensor that outputs spectrum data.

By using a MEMS sensor such as a field asymmetric mass analyzer (Field Asymmetric waveform Ion Mobility Spectrometry (FAIMS) or Differential Ion Mobility Spectrometry (DIMS)) together with the OLP 40, it is possible to provide a low-cost system 1 that is capable of recording and recognizing odors without requiring a high-cost CPU or DSP, without requiring large mechanical parts, and without requiring complex control circuitry or analysis circuitry.

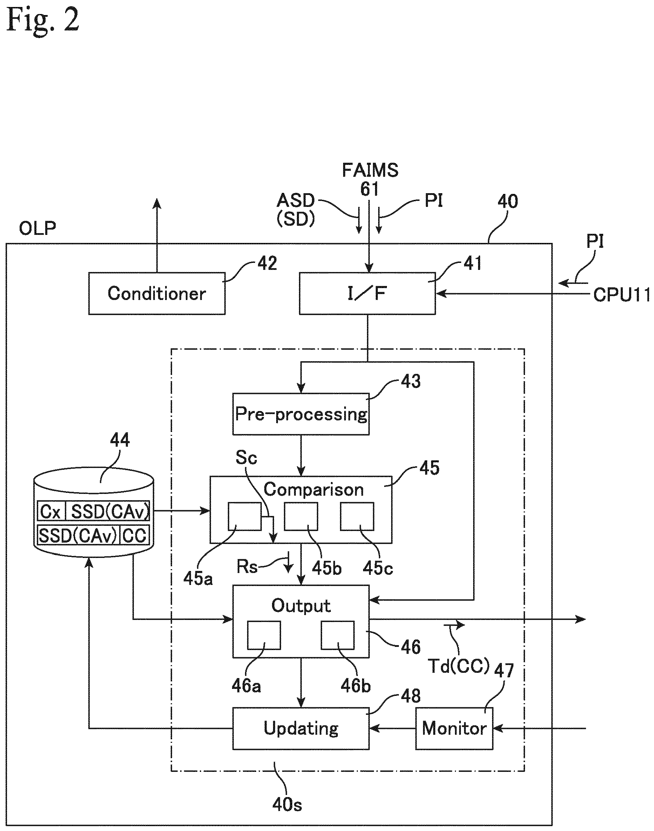

In FIG. 2, the functions of the OLP 40 are shown by way of a block diagram. The OLP 40 includes an input interface 41 that receives data SD from the sensor 61 via the sensor controller device 50 and periphery information PI including environmental information such as temperature and humidity, a conditioner 42 that controls the measurement conditions of the sensor 61 via the sensor controller device 50, and a search unit (analyzer unit) 40s that analyzes the obtained data and information and provides content. Aside from the information obtained via the sensor controller device 50, the periphery information PI can include application information obtained from the CPU 11 or the like, audio information obtained from the microphone 24, image information obtained from a camera, not shown, position information obtained from GPS, and the like. A variety of content is provided by the search unit 40s, such as content including chemical substance information in the form of context information, content relating to such context information, and content envisioned from such context information.

The content (information), that is the concept of the content, relating to chemical substances includes the names, properties, and the like of the chemical substances themselves. The content (information) relating to chemical substances also includes names, properties, attributes, and the like of products including the chemical substances. Content (information) envisioned from chemical substances includes phenomena directly or indirectly caused by the chemical substances, phenomena whose direct or indirect result is the chemical substances, and the like. As examples, such phenomena may be bombs, terrorism, fires, and other disasters or threats, and various other biological, physical, chemical, and social phenomena such as various diseases, disorders, growing condition, and weather. The search unit 40s may hold content including or related to such context information in a database or may select content supplied on a network using the functions of the PC 10.

The search unit 40s of the OLP 40 includes a preprocessing unit 43 that processes spectrum data ASD and the periphery information PI obtained via the input interface 41 to extract characteristic points (characteristic values), and a database 44 including a plurality of context information Cx, and a plurality of stocked data (stocked spectrum data) SSD (which in the present embodiment are characteristic values for respective data) that have been ranked (assigned rankings) for each of the plurality of context information Cx. The database 44 may also include periphery information PI that has been ranked (assigned rankings) for the respective context information Cx. Such periphery information PI may be information that is some of the environmental conditions, such as temperature and humidity, included in the periphery information PI, or may include all of such information.

Part or all of the database 44 may be stored in the storage 13. The OLP 40 further includes a comparison unit 45 that calculates a score Sc of each stocked spectrum data SSD for an obtained spectrum data ASD and an output unit 46 that outputs content CC that includes or is associated with the context information Cx so as to be displayed in order of a highest overall evaluation Rs that includes the score Sc and the ranking. The output unit 46 does not display the content CC itself but instead displays titles of content CC via the CPU 11 on the display 22 in the order decided as described above. The user (client) includes a function (functional unit) 46a that selects desired content CC from the titles Td displayed on the display 22 and displays such content CC on the display 22. In this example, the titles Td displayed on the display 22 correspond to the data for outputting the content CC in descending order of the evaluation.

That is, the output unit 46 includes a first unit (functional unit) 46a that outputs output data Td so that content CC associated with the context information Cx, which has been assigned a high ranking for the stocked spectrum data SSD for which a high score has been calculated by the comparison unit 45 (hereinafter such SSD is referred to as "golden data"), is selectable at the client in descending order of the overall evaluation Rs that includes the calculated score and ranking. In addition, the output unit 46 may include a second unit (functional unit) 46b that creates data (output data) Td in which the titles are displayed in order so that content CC associated with the context information Cx is selected by the client in descending order of an overall evaluation Rs that includes a ranking for environmental conditions included in the periphery information PI.

The OLP 40 includes a monitoring unit 47 that acquires information on the content CC selected out of the content CC outputted by the output unit 46 (i.e., out of the titles Td of the content CC) and an updating unit 48 that ranks the obtained spectrum data ASD for the context information Cx included in the selected content CC and adds such spectrum data ASD to the database 44.

The database 44 further includes characteristic values CAv of the stocked spectrum data SSD. In the following description, the characteristic values CAv are sometimes referenced as "golden data". The comparison unit 45 includes a function (functional unit) 45a that calculates the score Sc based on the characteristic values of the obtained spectrum data ASD and the characteristic values CAv included in the stocked spectrum data SSD. Such calculating function 45a includes a horizontal ranking function that assigns rankings to the characteristic values included in the obtained spectrum data ASD and calculates the score Sc from the characteristic values with a high ranking.

The comparison unit 45 includes a function (functional unit) 45b that corrects at least one out of the characteristic values of the obtained spectrum data ASD and the characteristic values of the stocked spectrum data SSD according to the periphery information PI and a function (functional unit) 45c that selects the spectrum data to be compared out of the stocked spectrum data SSD based on the periphery information PI.

Hereinafter, the analyzing process mainly carried out by the OLP 40 is shown using flowcharts. It is also possible to carry out such processing by processing distributed or shared between the OLP 40 and the CPU 11.

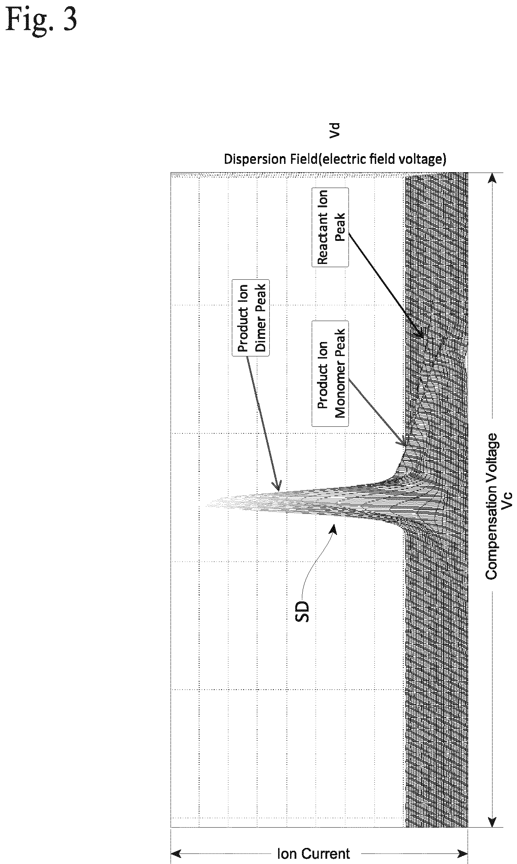

FIG. 3 shows an example of output data (measurement data) ASD of a typical FAIMS for a chemical substance. The data ASD is spectrum data (spectroscopic data) obtained as the values of ion currents when the Vc voltage has been changed while changing the Vd voltage in steps. In FIG. 3, the Vc voltage and ion current are expressed on the deepest line in the three-dimensional display for the Vd voltage that is fixed at the start. After this, measurement is carried out in the same way while gradually increasing the Vd voltage and outputs are obtained moving gradually toward the front from deep in the three-dimensional display. In this example, it can be understood that at least three peaks appear for a specified Vd voltage.

The FAIMS sensor 61 is capable of specifying chemical substances by detecting an ion current that changes in accordance with two variables that are the Vd voltage (dispersion voltage, an alternating current or pulsed AC voltage that cyclically changes with a MHz level frequency, for example, a frequency of 1 to around 20MHz and an appropriate duty cycle (for example, around 30%)) and the Vc voltage (compensation voltage, DC voltage). As one example, by varying the compensation voltage Vc relative to a fixed electric field voltage Vd, a two-dimensional spectrum of an ion current is obtained. In addition, by varying the electric field voltage Vd, a three-dimensional spectrum is obtained. The electric field voltage Vd is varied in a range of around 1,000V/cm to around 30,000V/cm, for example, or a larger range. It is also possible to vary the electric field voltage Vd for a fixed compensation voltage Vc to acquire two-dimensional data and to further vary the compensation voltage Vc to acquire three-dimensional data. In either case, the parameters (the electric field voltage Vd and the compensation voltage Vc) for obtaining ion currents form two-dimensional spectrum data SD.

In some cases, due to the characteristics thereof, a chemical substance will form a plurality of peaks when the electric field voltage Vd for example is fixed. As one example, for the chemical substance (Dimethyl-Sulfoxide, (CH₃)₂SO), if the Vc voltage is changed relative to a specified Vd voltage, three peaks will be obtained in the ion current due to the ion mobility characteristics of this chemical substance.

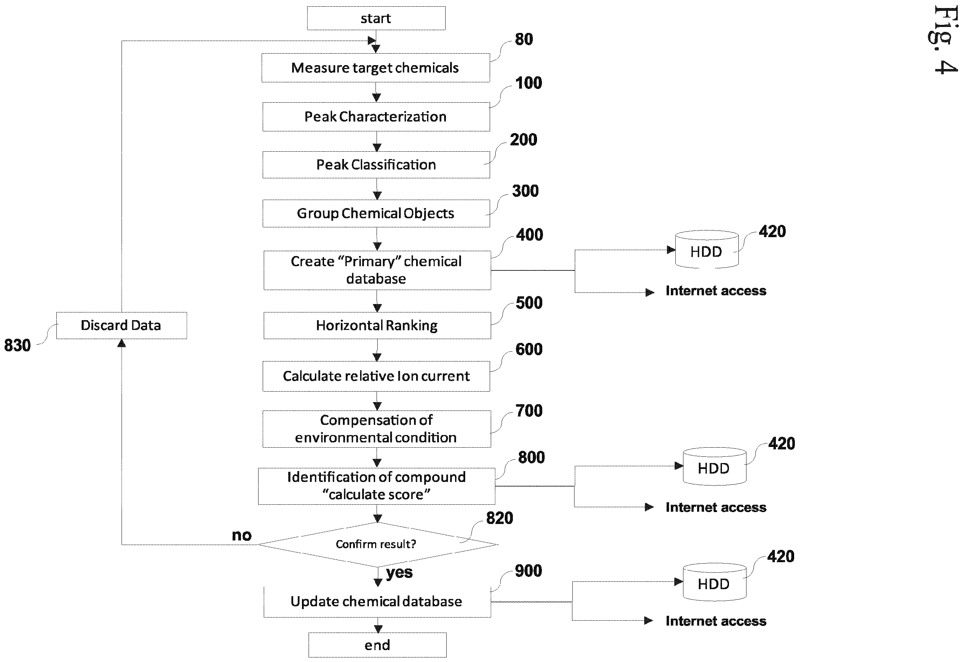

FIG. 4 shows the overall processing flow that processes the measurement data of the DMS (FAIMS) 61 using the analyzing function (analyzing unit, search unit) 40s of the processor (OLP) 40. It is possible to provide such processing as a program (program product) that operates on a computer, to provide the processing recorded on an appropriate recording medium, or to provide the processing via a computer network such as the Internet. Also, as described later, in place of having all processing carried out by the processor 40, it is possible to have the analyzing process carried out in a distributed or shared manner by a plurality of terminals or servers via a network.

The analyzing process (search process) includes a target chemical substance characteristics measurement process (target chemical measuring process, "Measure target chemicals") 80, a peak characteristics detecting process ("Peak Characterization") 100, a peak classification process ("Peak Classification") 200, a target chemical grouping process ("Group Chemical Objects") 300, a target chemical primary (base) database creating process ("Create 'Primary' chemical database") 400, a horizontal ranking process ("Horizontal Ranking") 500, a relative ion current calculation process ("Calculate relative ion current") 600, an environmental condition compensating process ("Compensation of environmental condition") 700, a target chemical identification process ("Identification of Chemical compound") 800, and a database updating process 900.

The target chemical substance characteristics measurement process 80, the peak characteristics detecting process 100, the peak classification process 200, the process 300 that groups the target chemicals (the chemical substances to be detected), and the base (primary) database generating process for the target chemical substances (the chemical substances to be detected) 400 are normally carried out by the preprocessing unit 43. The horizontal ranking process 500, the relative ion current calculation process 600, and the environmental condition compensating process 700 are normally carried out by the comparison unit 45. The target chemical identification process 800 including the vertical ranking process is carried out by the output unit 46. The database updating process 900 is carried out by the updating unit 48.

The flow shown in FIG. 4 is shown merely to explain an overview of the processing and it is not necessary to carry out the processing strictly in this order. As one example, the part including the processes 500, 600, 700, and 800 is carried out sequentially in an integrated manner within iterative processing without the process 600 being commenced necessarily after the process 500 has completely ended, for example. After the identification process 800 ends, the result of such process is displayed on the image output device 22 in FIG. 1, for example. Here, if the user is satisfied with the results, such results are treated as being approved, regardless of whether an unknown chemical substance has been measured or whether a known and already identified chemical substance has been measured. In such case, the database updating process 900 is carried out and the series of operations ends. On the other hand, if results that are satisfactory to the user were not obtained, a re-examination or the like is normally carried out to check whether there is a problem with the measuring equipment, the data is discarded, and measurement is carried out once again (process 830).

The peak characteristics detection process (Peak Characterization) 100 is a process that measures the peak characteristics of the ion currents appearing in the data measured by the DMS 61.

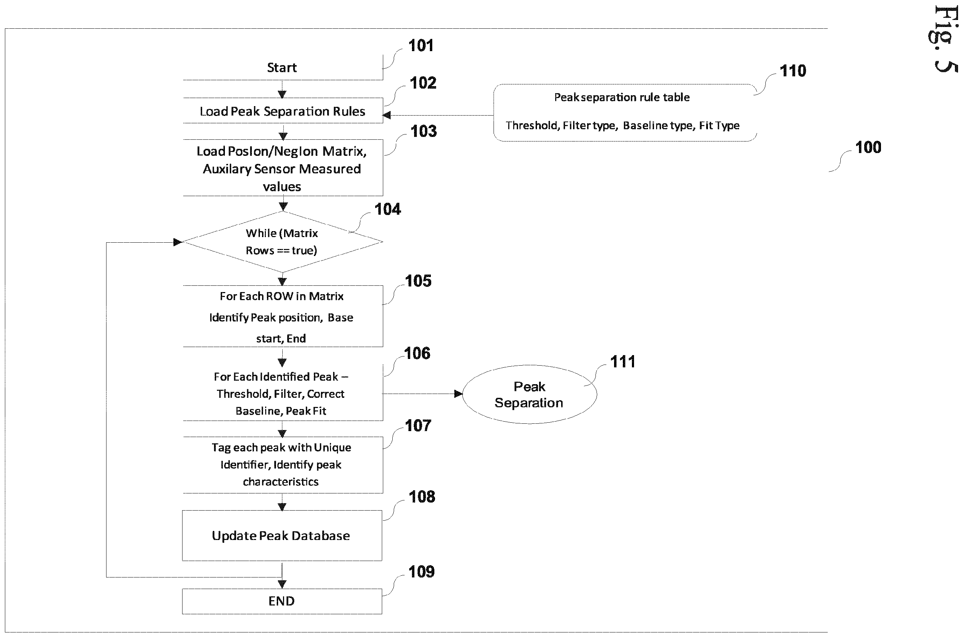

FIG. 5 shows a more detailed flow of the peak characteristics detection process 100. This flow is a process that detects, when the compensation voltage Vc is changed relative to one fixed voltage Vd, whether peaks are present in the characteristics of the ion currents, how many peaks there are when peaks are present, and the characteristics of the peaks when peaks are present.

The process 101 is an entry point of such processing flow. In the process 102, standards (Peak Separation rule table) for carrying out a peak separation process is set. The standards ("standard characteristics") 110 for carrying out the peak separation process include a threshold for distinguishing noise and the like, a format specification ("filter type") for a filtering process (smoothing process) for removing noise, characteristics of a baseline ("baseline type") that appears behind the peak characteristics, a curve fit characteristics ("fit type") that are used in peak separation, and the like. For the standard characteristics 110, specific values are selected in accordance with the application or according to an indication from the user, or if there has been no particular indication, default values are selected.

The threshold indicates a threshold for carrying out identification of a fine noise component that is normally included in measurement results and peaks caused by a specified chemical substance. If such threshold is small, fine noise will be judged to be a peak and unnecessary processing will be carried out. On the other hand, if the threshold is large, although it will be possible to remove unnecessary noise, very small but necessary peaks will be missed. Such values are set based on experience in accordance with the application.

The format specification (filter type) for the filtering process specifies the format of a smoothing filter process for removing noise. More specifically, the order and coefficients of the filter are specified.

The baseline characteristics (baseline type) are what should appear when peaks are not present and indicate the characteristics of the baseline that is hidden by the peaks. Normally, although a flat line (straight line) will be produced in many cases when there are no peaks, in such cases the line may have a certain gradient. With the present invention, the baseline characteristics can be approximated by a polynomial, not just as a straight line.

The curve fit characteristics (Fit Type) specifies characteristics for carrying out fitting of peak curves that is necessary when a plurality of peaks are present. Normally, although Gaussian characteristics are often used, it is also possible to specify other characteristics, such as Lorentz characteristics.

In process 103, an ion current measurement result (Poslon) for positive ions and an ion current measurement result (Neglon) for negative ions are acquired as the measurement data ASD, with data on environmental conditions also being acquired as the periphery information PI. With the FAIMS 61, it is possible to measure positive ion currents and negative ion currents at the same time, with the processing in such case being shown. Such values are used in the subsequent processes.

The process 104 is a loop process for carrying out processing for a number of iterations equal to the number of measured values of the electric field voltage Vd. The conditional statement "Matrix Rows==true" in the process 104 refers to measuring the positive and negative ion currents for the corresponding single value of the electric field voltage Vd so that such data is present in the values (Matrix). The processing in step 105 to step 108 is carried out for the measurement values for a single value of the electric field voltage Vd.

In the process 105, for such measured valued of the ion current, first the difference with the previous value is found, it is assumed that a peak is present if the difference with the previous local minimum value exceeds the threshold, and the center position (or "position", a value of compensation voltage Vc) of the peak, the start position of the base where the peak is present (or "base start", a value of the compensation voltage Vc) and the end position of the base (or "base end", a value of the compensation voltage Vc) are decided. Such processing is carried out for the number of peaks, including "0". That is, there are cases where peaks are not present, and cases where a plurality of peaks are present.

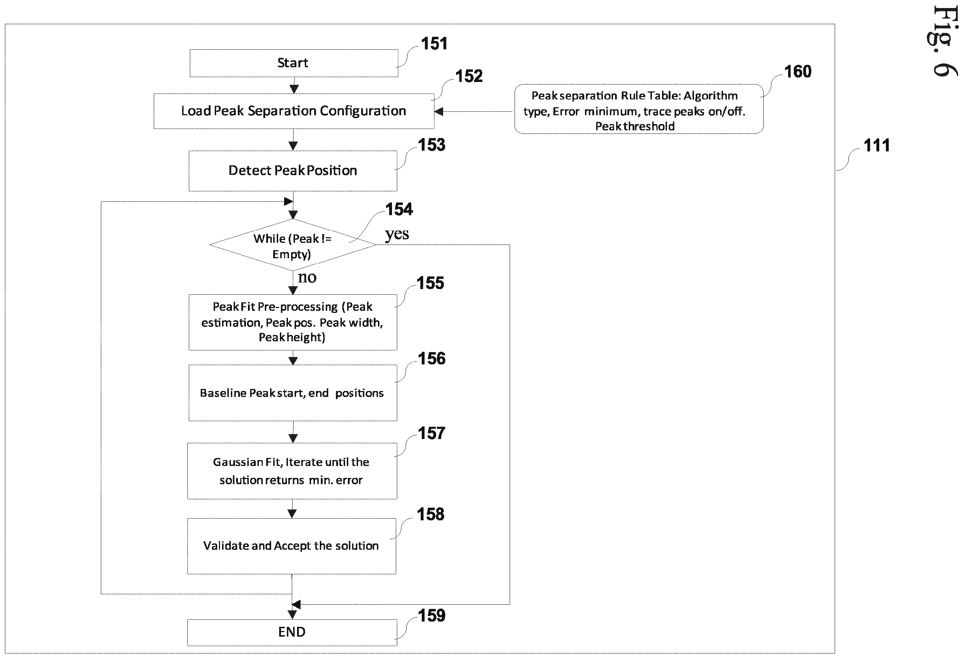

In the process 106, a smoothing filter process is carried out first on the measured values of ion current and then, on the respective peaks that have been detected/specified in the process 105 in order from the peak with the highest peak value, a baseline correction process is carried out and a peak fitting process according to a method such as Gaussian characteristics or spline approximation is carried out. By carrying out such processes, it is possible to carry out a separation process for peaks even if a plurality of peaks are overlapping. Such processing will be described separately with reference to FIG. 6 as a peak separation ("Peak Separation") process 111 subroutine.

In the process 107, unique numbers are assigned to the plurality of peaks obtained in the process 106 and the characteristics (characteristics such as peak position, peak value, and peak width) are found for such peaks.

In the process 108, the database of peak characteristics obtained in the process 107 is updated to the latest values. The process 109 is the end point of the process 100.

FIG. 6 shows the details of the peak separation process (Peak Separation) 111. In this drawing, process 151 is the entry point and process 152 is a routine that sets various conditions for carrying out the peak separation process. The standards (peak separation rule table) 160 for peak separation are loaded. Such standards 160 include the type of algorithm to be used, a judgment method for error minimization, whether to trace the peak positions, a threshold for peak values, and the like.

In the process 153, first data on the positions of all of the peak candidates is acquired. The process 154 is a branch for repeating the processing below for a number of iterations equal to the number of peak candidates. Such processing is carried out in order from the peak with the largest peak value. In the process 155, preprocessing for peak fitting is carried out. More specifically, the peak position, peak width, peak height, and the like are found. In the process 156, the position of the baseline that must be present behind the peaks is established. The peak start position and the peak end position are found from the peak gradient characteristics and the gradient of the baseline in non-peak positions.

In the process 157, a fitting process that uses a Gaussian curve, for example, is carried out. The fitting process assumes that a peak can be approximated to a single Gaussian characteristic and is carried out while varying parameters such as the peak position and the peak width to minimize the root-mean-square error or the accumulated value of the absolute error so as minimize the difference between the actual data and a value produced by adding the Gaussian characteristic that approximates the peak and a value that approximates the baseline in the same way. Next, it is assumed that such peak can be approximated using two Gaussian characteristics (two peaks) and a peak fitting process is carried out in the same way. Such process is carried out while increasing the number of Gaussian characteristics until the error between the original waveform and the fitted waveform falls below a fitting threshold.

By carrying out such processing, it is possible to separate peaks and correctly specify the respective peaks, even for data where two or more peaks are overlapping.

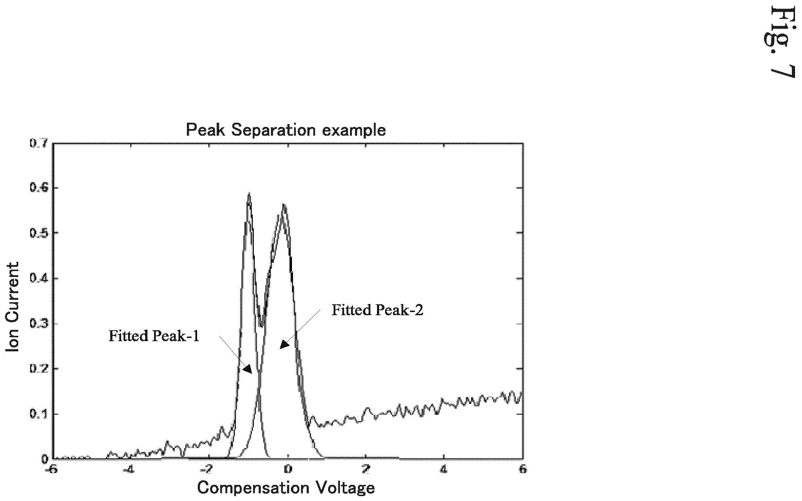

FIG. 7 shows an example of such processing. In this example, two peaks are overlapping on a baseline that has a gradient. Even with such conditions, it is clear that by repeatedly carrying out peak fitting while increasing the number of Gaussian curves, it is possible to approximate using two Gaussian curves and that the two overlapping peaks are correctly separated. By doing so, it is possible to separate a plurality of overlapping peaks and to find peaks that are hidden behind large peaks. Also, by carrying out such processing, it is possible to find values that cannot be detected in the overlapping state, such as the full width at half maximum (FWHM) described later.

In the process 158, verification that the result obtained by the fitting in the process 157 does not contradict other results so far is carried out and the result is determined to be a true result if there are no problems. Once the process 158 has ended, the processing returns to the process 154 to process the next peak candidate. With this procedure, the fitting process is carried out successively from the peak candidate with the highest peak value to the final peak candidate. The process 159 is the end point of the process 111.

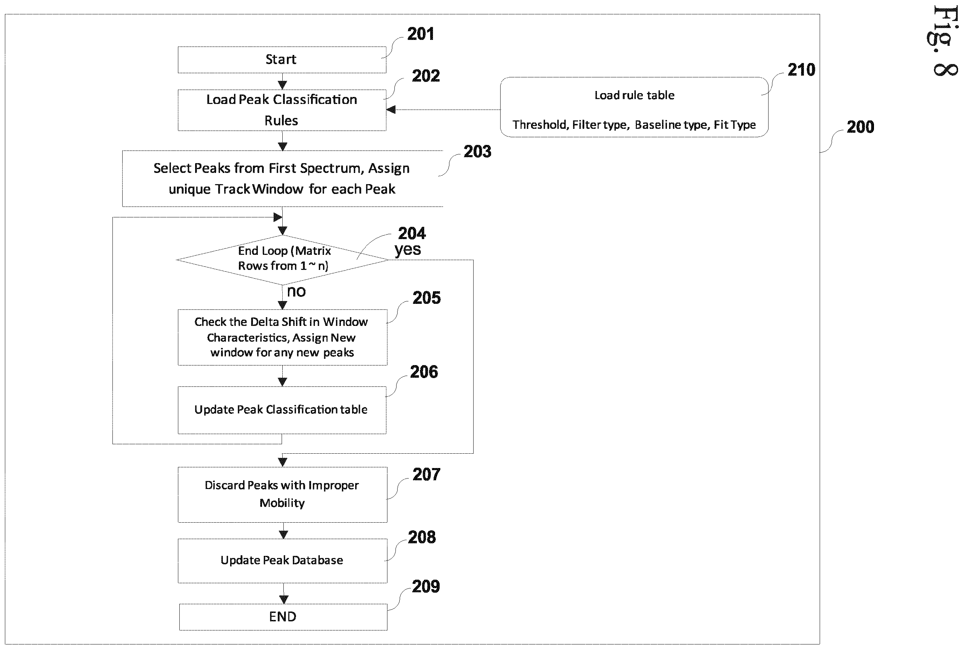

FIG. 8 shows the detailed flow of the peak correlation analyzing process ("Peak Relation Analysis") 200. The process 201 is the entry point of the process 200. In the process 202, standards (rules) 210 for classifying peaks are loaded. More specifically, the standards include a threshold, a type of smoothing filter, a baseline type, a fitting function, and the like and usually, the standards are the various parameters and conditions used before in the process 100. Some of such parameters are used directly in the process 200 and some are used as conditions when judging the result of the previous process 100.

In the process 203, preprocessing for the loop process formed by the following processes 204, 205, and 206 is carried out. More specifically, a window for tracking is assigned to every peak that is present in the measurement results (spectrum) of the ion currents for a first voltage Vd (normally the lowest voltage out of the measured voltages Vd). More specifically, the position of each peak is set as the position of a window and a certain height and width in the front-rear direction are provided (a plus/minus delta voltage value is provided for the voltage Vc of the peak center).

The process 204 is a branch for carrying out iterative processing in a matrix storing the measurement results for ion currents from a row of measurement results for the first electric field voltage Vd up to a row of measurement results for the final electric field voltage Vd. The processing content that is iteratively carried out is the processing shown in the process 205 and the processing shown in the process 206.

In the process 205, it is investigated how far a peak in the data presently being processed has moved relative to a window of an initial value set in the process 203 or of the peak set in the immediately preceding loop. If a new peak position is within the frame of the window, such position is set as the new window position. It is also possible for peaks to be newly created and destroyed. A new window is set for a newly generated peak, while a window is destroyed in the case where a peak has been destroyed. In the process 206, the table that was provided in advance and expresses the correlation between the peaks on each row and the windows is updated.

In the process 207, after the processing has ended for all of the rows, a peak group is judged to be invalid if the change in ion mobility relative to the change in the electric field voltage Vd (such value is selected in advance before starting measurement) is improper (that is, if the change in the difference in ion mobility is too large relative to the previous value).

In the process 208, the database of peaks that have been finally decided by the process described above is updated. The process 209 is the end point of the process 200.

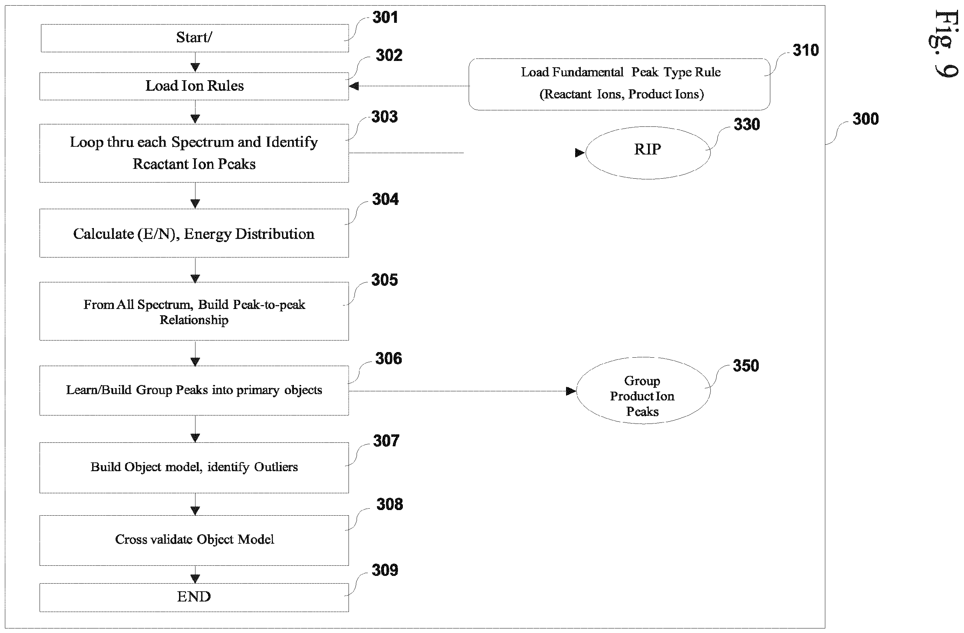

FIG. 9 shows a detailed flowchart of the target chemical grouping process ("Group Chemical Objects") 300. In this process 300, processing for grouping information showing chemicals (substances) to be detected is carried out. The process 301 is the entry point of the process 300.

The process 302 loads standards (rules) 310 for the chemical substance grouping process. More specifically, these are theoretical rules relating to the peak characteristics of reactant ions such as water that appears at the ionization stage and of the ionized target sample ("Product Ions"). Such theoretical rules are described in detail in "Ion Mobility Spectrometry" by G. A. Eiceman and Z. Karpas, published by CRC and "Differential Ion Mobility Spectrometry" by Alexandre A, Shvartsburg, also published by CRC, for example, and although not described in detail here, will be discussed in brief below. Although nitrogen (N₂), oxygen (O₂) and water (H₂O) are normally included in air, fine amounts of chemical substances (here assumed to be "M") are also mixed in, and when ionization has been carried out, the composition normally changes as shown below. H⁺(H₂O)₃+M+N₂↔MH⁺(H₂O)₂+N₂+H₂O↔M₂H⁺(H₂O)₁+N₂+H₂O

Although the transition of ionized molecules is shown in the above expression, the amounts of the respective components are not shown. The first terms are reactant ions, the next terms are monomers, and the final terms are dimers. At first, it will be easy for ions to combine with the water content so that the ions will combine with three water molecules to produce water ions. If the electric field strength is increased in this state, one of the water molecules will be replaced by the chemical substance M to form an ion called a monomer composed of one M molecule and two water molecules. If the electric field is increased further, ion called a dimer composed of two M molecules and one water molecule will be formed. In this case, the reactant is water.

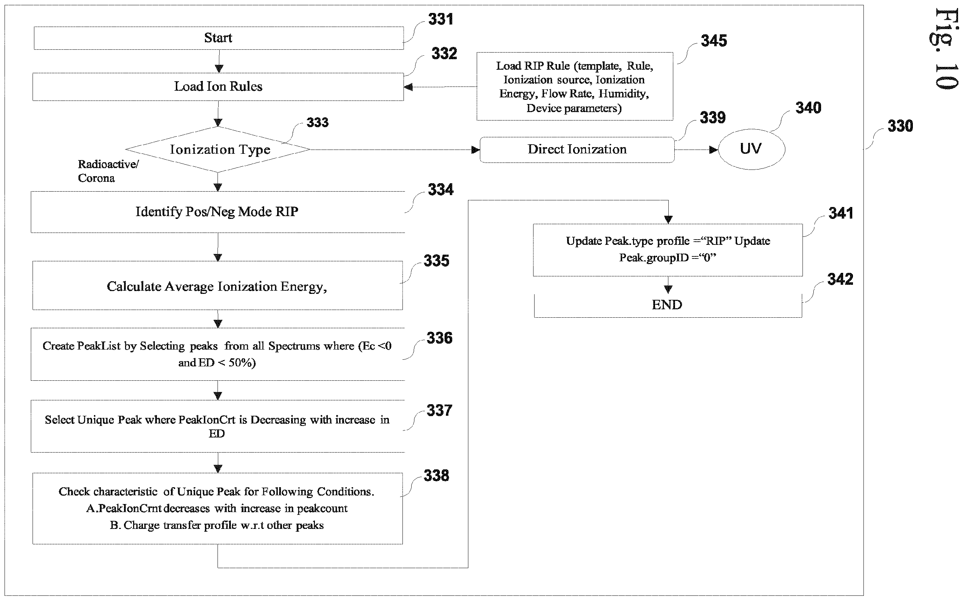

In the process 303, peaks produced by reactant ions are specified in the ion current measurement data (spectra) for all of the voltages Vd. The details of this process are shown separately in detail in FIG. 10 as the subroutine 330 and will be described later.

In the process 304, the E/N characteristics (the energy-density characteristics) are calculated to find the energy distribution of the respective peaks. In the process 305, the correlation between the peaks is found from all of the ion current measurement data (spectra).

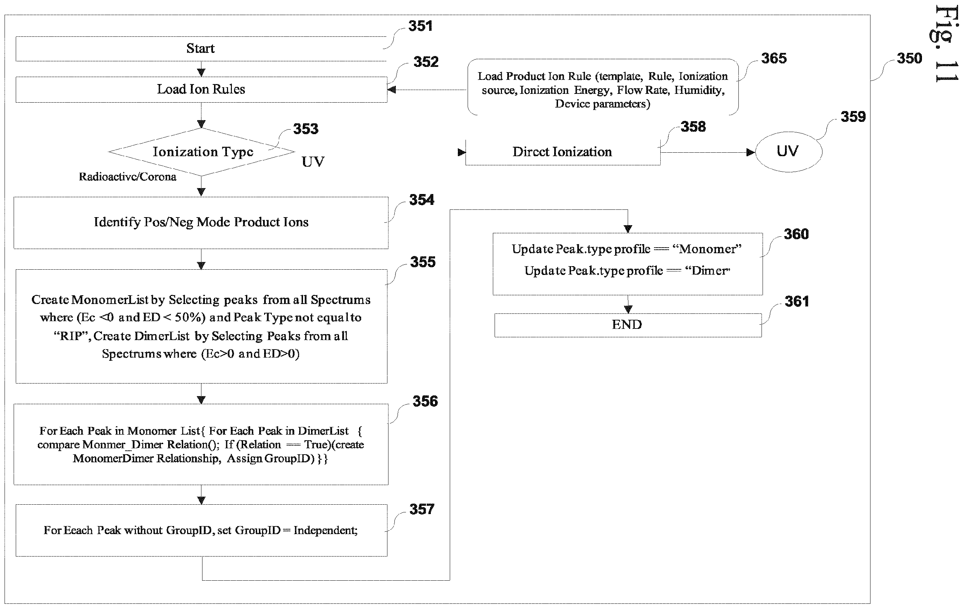

In the process 306, the mutual relationships between the monomers, the dimers, and the trimers of the sample (Product Ions) that has been ionized and the RIP (reactant ion peaks) caused by the water, nitrogen, oxygen, and the like included in the environment acting as reactants are investigated to decide the correlation between the peaks. The details of this process are shown separately in detail in FIG. 11 as the subroutine 350 and will be described later.

In the process 307, the peaks derived from the sample that was ionized (product ions) are decided from the correlation between the plurality of peaks decided in the process 306 ("grouping"). Isolated peaks that are unrelated to other peaks are also decided. In the process 308, it is verified that the correlation between the various peaks decided by the processes described above is not inconsistent, and such correlation is rejected if problems exist. The process 309 is the end point of the process 300.

FIG. 10 shows the details of the process that specifies the peaks (RIP) produced by reactant ions. The process 331 is the start point and in the process 332, various standards 345 relating to the characteristics of ions are loaded. More specifically, these standards include the method of the ionization process, the ionization energy, the air flow, the humidity, and parameters of the sensor itself.

In the process 333, a branch is performed in accordance with the method of ionization. In the case of radioactive or corona ionization, the processing from the process 334 is carried out, while in the case of direct ionization using ultra violet or the like, there is a branch to the processes 339 and 340. However, for the present invention, ionization methods that use ultra violet or the like are not discussed.

In the process 334, the polarity of the RIP is decided. That is, it is decided whether RIP are to be found for the ion current characteristics with positive polarity or RIP are to be found for the ion current characteristics with negative polarity (RIP are present for both polarities). In the process 335, the average ionization energy is calculated.

In the process 336, a list of peaks that are RIP candidates is created. It is known that as the characteristics of the sensor device, so long as the sensor device is being used in a normal environment, the compensation voltage Vc at the peak positions of RIP will become minus if the electric field voltage Vd is increased from zero. Also, in the same way, it is known that as the characteristics of the sensor device, if the electric field voltage Vd exceeds 50% of the maximum value, the ions will be passed to other molecules so that the RIP peaks are destroyed. For this reason, out of the large number of RIP candidates, peaks where the compensation voltage Vc of the peak position is not minus are excluded and, in the same way, peaks where the electric field voltage Vd exceeds 50% are excluded.

In the process 337, out of the RIP candidates, peaks where there is no decrease when the electric field voltage Vd is increased are excluded. It is known that when the electric field voltage Vd is increased, due to the properties of the reactants, the ion current of an RIP peak will decrease since the ions will be gradually taken by monomers, dimers, and trimers of other (target) chemical substances. Accordingly, out of the RIP candidates, peaks that do not decrease when the electric field voltage Vd is increased are excluded.

In addition, in the process 338, the RIP peak candidates are further narrowed down according to whether they comply with the two conditions given below.
(1) Since monomers, dimers, and the like of other (target) chemical substances will be newly produced as the RIP peak value decreases, the first condition investigates whether the number of peaks increases in keeping with a decrease in the RIP peak value.
(2) Since the transferring of electrical charge that was acquired by RIP to monomers, dimers, and the like of other (target) chemical substances will increase as the RIP peak value decreases, the second condition calculates the energy amounts of the RIP candidates and the corresponding monomers, dimers, and trimers, and calculates whether such amounts are being kept at constant values.

The process 341 set the peak attribute at "RIP" for the RIP candidates that remain at the end and also sets the group ID at "0" which indicates RIP. The process 342 is the end point of this process.

FIG. 11 shows the details of the process that specifies the correlation between a plurality of peaks of monomers, dimers, and the like of the target chemical substances. By carrying out such processes, the peak characteristics are grouped for each specified chemical substance. The process 351 is the start point and in the process 352, various standards 365 relating to ion characteristics are loaded. More specifically, these are the method of the ionization process, the ionization energy, the air flow, the humidity, and the parameters of the sensor itself.

In the process 353, a branch is performed in accordance with the method of ionization. In the case of radioactive or corona ionization, the processing from the process 354 is carried out, while in the case of direct ionization using ultra violet or the like, there is a branch to the processes 358 and 359. However, for the present invention, ionization methods that use ultra violet or the like are not discussed.

In the process 354, the polarity of the peaks of the target chemical substances is decided. That is, it is decided whether peaks are to be found for ion current characteristics with positive polarity or peaks are to be found for ion current characteristics with negative polarity (peaks may be present for both polarities).

In the process 355, a list of peaks that are monomer candidates is created. It is known that as the characteristics of the sensor device, so long as the sensor device is being used in a normal environment, the compensation voltage Vc at the peak position of monomers will become minus if the electric field voltage Vd is increased from zero. Also, in the same way, it is known that as the characteristics of the sensor device, if the electric field voltage Vd exceeds 50% of the maximum value, ions are passed to dimers and the like and the peaks are destroyed. For this reason, out of the large number of monomer candidates, peaks where the compensation voltage Vc of the peak position is not minus are excluded and, in the same way, peaks where the electric field voltage Vd exceeds 50% are excluded. Peaks already established as RIP are also excluded. A peak list of dimer candidates is created in the same way. The judgment condition for dimers is that the electric field voltage Vd is positive and the compensation voltage Vc is also positive.

In the process 356, peaks where there is correlation as monomers and dimers are specified from the monomer candidates and the dimer candidates. More specifically, if the peak value of a dimer candidate increases as the peak value of a monomer candidate decreases or conversely if the peak value of a dimer candidate decreases as the peak value of a monomer candidate increases, the same group ID is assigned to show that there is correlation between such peaks.

In addition, in the process 357, a unique group ID is assigned to peaks that were not assigned a shared group ID and the peak attribute is set at "independent".

In the process 360, the peak attribute is set at "monomer" and "dimer" respectively for peaks that have been determined to be monomers and dimers. The process 361 is the end point for this process.

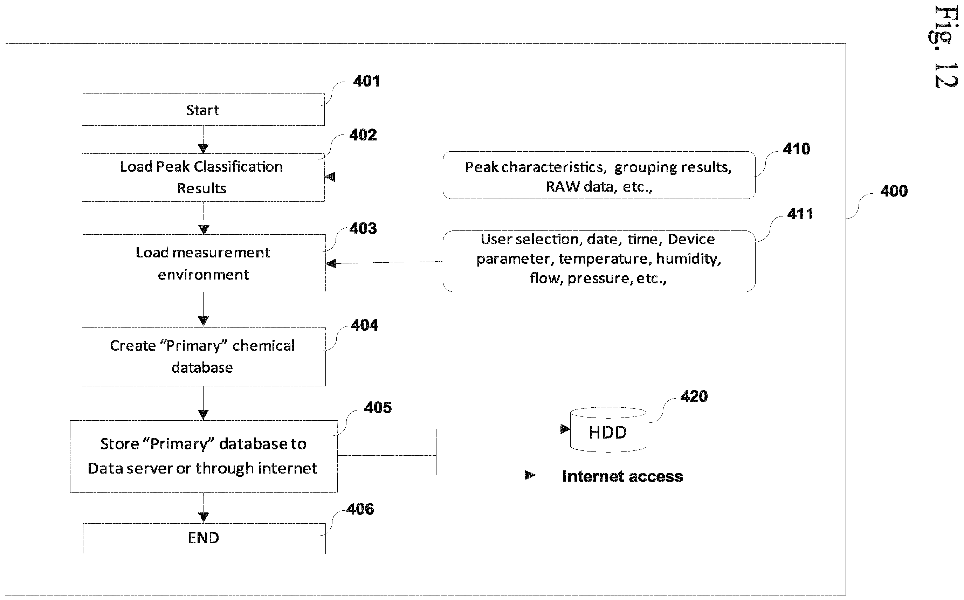

FIG. 12 shows the flow of creation of the base database 44 of target chemical substances. The process 401 is the start point and first in the process 402, the measurement results so far and the various characteristics 410 (peak characteristics, grouping results, and the like) that have been found from the measurement results are loaded. In addition, in the process 403, various measurement conditions 411 (user specified parameters, the date/time, sensor element characteristics, temperature, humidity, air flow, flow pressure, and the like) are loaded. Such values become the main entries of the database. In the process 404, such data is used to create the basic (primary) database of the target chemical substances. In addition, the basic database generated in the process 405 is stored in the database 420 that stores data on various chemical substances. It is possible to carry out this process via a storage apparatus (HDD) that is directly connected by an electric circuit or the like or a server that is electrically connected and also to access a database that is set up remotely using an Internet connection or the like.

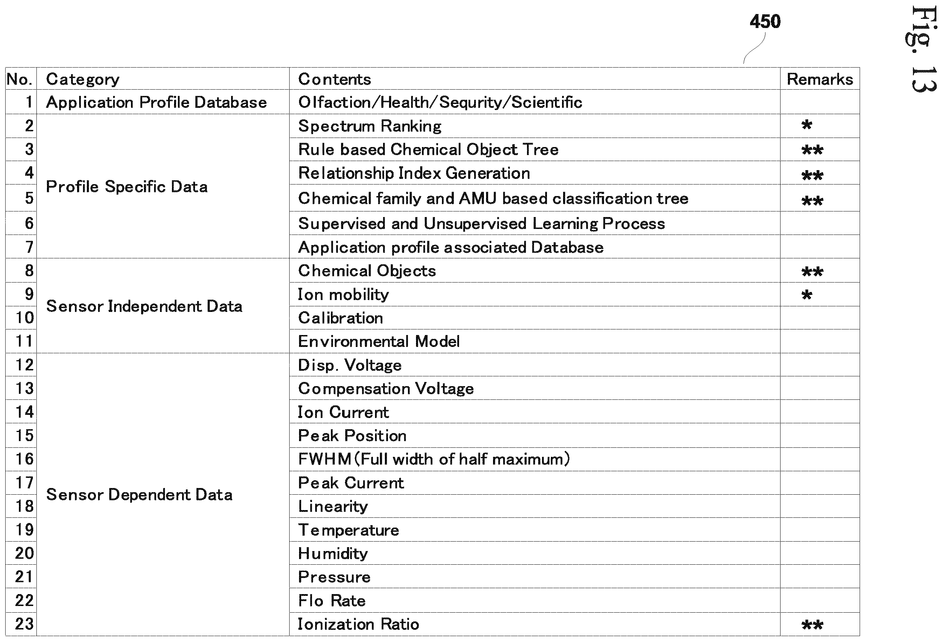

FIG. 13 shows an example of such a base database 44. Although the database is formed from twenty-three entries in the table 450 shown in FIG. 13, the database is not limited to this, and it is not problematic for other entries to be included. In the example in FIG. 13, a typical database that is needed to describe the present invention is given. Note that although a case where corresponding values are stored in the respective entries of the database is shown to simplify the description, as a practical matter, many entries do not have data that is directly entered and instead pointers will be stored, with actual values or a plurality of vector values or a table (matrix) of other dimensions being stored at the locations shown by the pointers. Entries that have an added "*" mark are unknown data for which values have not been found at such time, with such values being calculated by the processing described later to determine the values.

Entries that have an added "**" mark are entries where values are read out from the database in the process 406 and then used once the corresponding context information (in the present embodiment, a chemical substance) is known. If the corresponding context (chemical substance) is not known, in the processing described later, a process that specifies or identifies the target chemical substance is carried out, values are read out from the database 44 after confirmation, and the values are then used.

The first row in FIG. 13 shows the application profile. This is a parameter that is selected by the user at the start, and indicates the field in which chemical substances being measured. As one example when carrying out a specifying process on a chemical substance, this value is used to decide the priority order (when a plurality of substances are allocated with the applications) of the chemical substances to be referred to and compared, so that the comparison process is carried out with the optimal order for the field in question, resulting in an increase in the speed of the specifying process. Specific examples include the field of (typical) olfactory processing, health-related fields, security fields, and chemical/scientific fields.

On the second to seventh rows in FIG. 13, values that are unique to the application profile are used. The second row is ranking values within the profile ("vertical ranking values"). Such values initially take default values, but are updated every time the specifying process for chemical substances is repeated within the same profile. In practice, such values are held in a separately provided vertical ranking table, and the values here are copies from such table. The third row in FIG. 13 is a branch tree of chemical substances based on rules. The fourth row shows the relationship for database generation (i.e., from which database the present database was created), described later. The fifth row shows a classification tree based on chemical substance families and AMU (atomic mass units). The sixth row shows whether the learning process for chemical substances is a supervised instructional learning process with indications being given by the user or not. The seventh row is a pointer showing a database that is unique to each application profile.

The eighth to eleventh rows in FIG. 13 store data that is independent of the sensor. The data on the eighth row that is independent of conditions such as the sensor type, measurement method, and manufacturer, stores chemical substance names. In practice, the names of chemical substances are not directly stored, and instead pointer values showing corresponding chemical substances in a list table of chemical substances that is classified into categories are stored. For such values, data is set from the start according to a user indication if the target chemical substances are known, but if such substances are not known, the value "Unknown" is set until the substances are established by subsequent processing. The ninth row shows ion mobility. Such values of data will also not have been found at the present time, and are calculated by a later process and then stored. Since such values are calculated for the detected peak characteristics, the values are calculated for two-dimensional measurement points, thereby producing data that is three-dimensional as a whole. The tenth row is data for calibration purposes. The eleventh row is pointers to data defining a model of the transfer function for environmental conditions such as temperature, humidity, air flow, and air pressure.

The twelfth row to the twenty-third row store data that is dependent on the sensor. In the data dependent on conditions such as the type of sensor, the measurement method, and the manufacturer, the Vd voltage (Dispersion voltage) is stored on the twelfth row and the Vc voltage (compensation voltage) is stored on the thirteenth row. Such values are indicated by the user at the start of measurement by setting the start voltage and the range of variation.

The fourteenth, fifteenth, sixteenth, and seventeenth rows store the measurement results for ion currents and the peak positions (the voltage Vd and the voltage Vc), the full width of half maximum (FWHM), and the current values (peak currents) at such peak positions for positions in the measurement results for ion currents where peaks are formed. It should be obvious that a plurality of such values are present. In practice, such values are stored in a separately provided table (matrix), with pointers to such table being stored here instead. Although the ion current measurement values on the fourteenth row include all of the measurement results, the peak currents on the seventeenth row are only the values of the peak positions. Such data is also data for two-dimensional measurement points.

The eighteenth, nineteenth, twentieth, twenty-first, and twenty-second rows respectively store data on linearity, temperature, humidity, (gas) pressure, and (gas) flow rate. The twenty-third row stores data on ionization rate. Although the chemical substances included in a gas are ionized by an ionizer, the ionization rate will vary due to the influence of water molecules and molecules of other chemical substances included in the same gas. For this reason, such values are used to calculate the ionization rate. Although such values will be established from the start when the chemical substances are known, if such substances are not known, the values are set at "Unknown" with the values being established once the chemical substances are known.

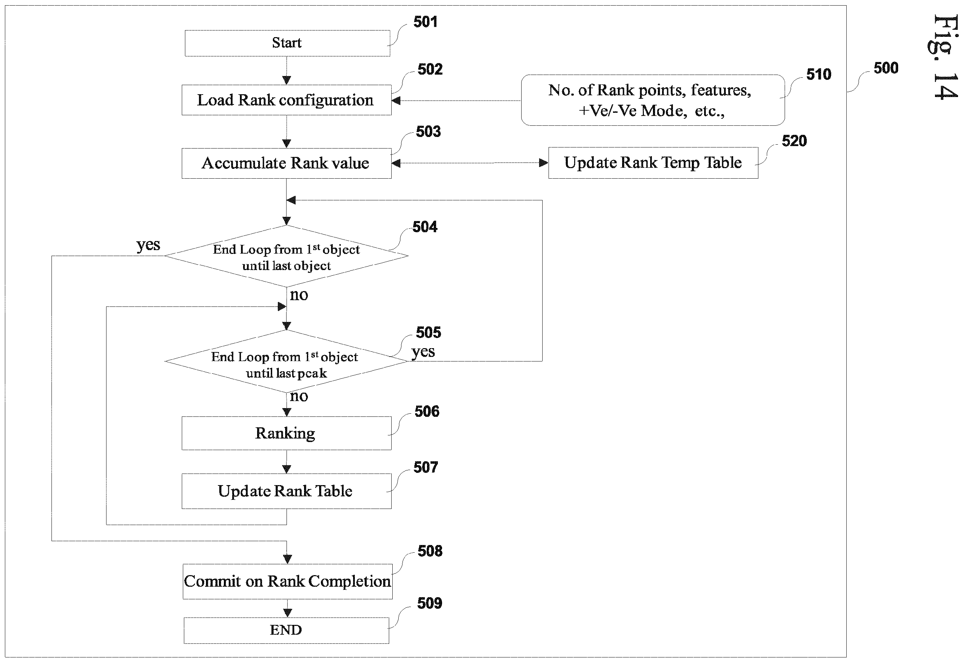

FIG. 14 shows the detailed flow of the horizontal ranking process 500. Here the expression "ranking" refers to a process that extracts, from the measured data, data believed to best express the characteristics of the chemical substance. By appropriately using the data on rankings, it is possible to carry out estimation for distances between data sets at high speed and even more precisely, so that it is possible to carry out a specifying (identification) process for the context information (chemical substance information) Cx corresponding to the obtained data ASD at high speed.

The data (original data) ASD obtained from the FAIMS 61 is data which is obtained for two-dimensional parameters and as a whole is three-dimensional, as shown in FIG. 3. This means that a large amount of processing is necessary to compare all of the data, which takes a long processing time. However, as is clear from the example in FIG. 3, most of the data has no special characteristics. In many cases, the characteristics will appear at the parts where there are peak values in the measurement data (ion current values). The ranking process carries out ranking of the peak data in order from the distinguishing characteristic data (characteristic values).

In the identification process of chemical substances described later, by carrying out the identification process for only the ten data sets with the higher ranking values, for example, it is possible to reduce the processing amount (time) of the identification process that normally requires a huge amount of processing and thereby speed up the identification process. It should be obvious that it is possible to change such number of data sets in accordance with the purpose or intended use of the apparatus and/or the target chemical substance, or in accordance with the wishes of the user. Also, after the identification process has been carried out, by increasing the number of characteristic data sets and carrying out the identification process again in a secondary manner for higher-order chemical substances with a high score (i.e., chemical substances with a high possibility of being the subject measuring substance) out of the chemical substances given as candidates for the chemical substance, it is possible to avoid misjudgments.

From another viewpoint, it is also possible to restrict the measurement itself by limiting to part of conditions or range where data with a high ranking is obtained. If the measurement target is known from the start, it is possible to exclude in advance a measurement range with a low ranking, or in other words, a range where characteristics do not appear and to carry out measurement limited to a measurement range where a high ranking is expected, or in other words, where characteristics are expected to appear. More specifically, by carrying out measurement while limiting the range of the Vd potential and/or the Vc potential, it is possible to reduce the measurement time and to reduce the amount of data. In an extreme case, it is also possible to limit to just the locations where the peaks appear, that is, to carry out measurement with limited values of the Vd potential and the Vc potential.

The process 501 is the entry point of the ranking process. The process 502 loads a structure 510 for the ranking process. More specifically, this is the number or cycles of ranking processes, the positive/negative mode of the ion currents, the peak ion current value, the peak width, the full width at half maximum, and the like. In the process 503, provisional values of the rankings are calculated and set as the initial values in the ranking table 520.

The part composed of the processes 504, 505 is a loop process for carrying out a ranking process on the peaks (characteristic values) for each target chemical substance (target chemical) that has been detected in the processing in the processes 100, 200, and 300 and grouped. In the process 504, processing is iteratively carried out for each chemical substance that has been grouped. In addition, in the present embodiment, processing is repeated within the loop in the process 505 for the number of peaks that are characteristics values.

In the process 506, calculation of ranking values is carried out. More specifically, peak ion current values, peak widths, the full width at half maximum of the peaks and the like are compared with provisional values and if the provisional values are exceeded, in the process 507, the data is updated as the maximum values and values normalized at such maximum values are also calculated. Depending on the application, there are cases where, if the full width at half maximum has been normalized at the peak value of the ion current, the lower the value, the better. The ranking table is updated using such values. If the maximum values have been updated, the values of the other peaks are also recalculated. Although it is possible to use a variety of methods as the method of finding the rankings, as one example, it is possible to assign rankings based on or according to the magnitude of a simple sum of absolute values that have been normalized for each entry. It should be obvious that it is also possible to add or change the weighting for each entry.

When the loop process has ended, in the process 508 it is declared that the ranking process has ended. The process 509 is the end point of the ranking process.

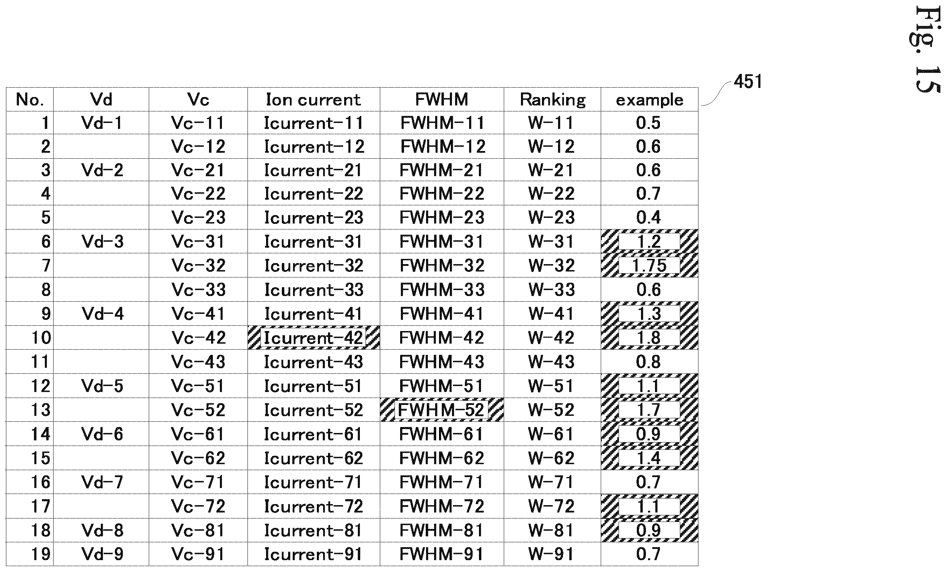

FIG. 15 shows a specific example of the horizontal ranking table 451 obtained by the horizontal ranking process 500 shown in FIG. 14. The example in FIG. 15 shows a case where one to three peaks are present for each of nine Vd (dispersion voltage) values. For each peak out of all of the peaks, a ranking value is calculated from the ion current value and FWHM value of the peak to find the importance level of the peak. In the case of FIG. 15, the simple sum of the proportion of the ion current to the maximum peak ion current and in the same way the proportion of the FWHM value of the peak to the maximum FWHM is set as the ranking value. It should be obvious that it is also possible to use other values, for example, only the value of the peak ion current value, as the ranking value. In the example in FIG. 15, as one example the values in the column at the right end are obtained as example ranking values. If it is assumed that the top 10 ranking values will be used, the shaded values in such column will be used with the other values remaining unused.

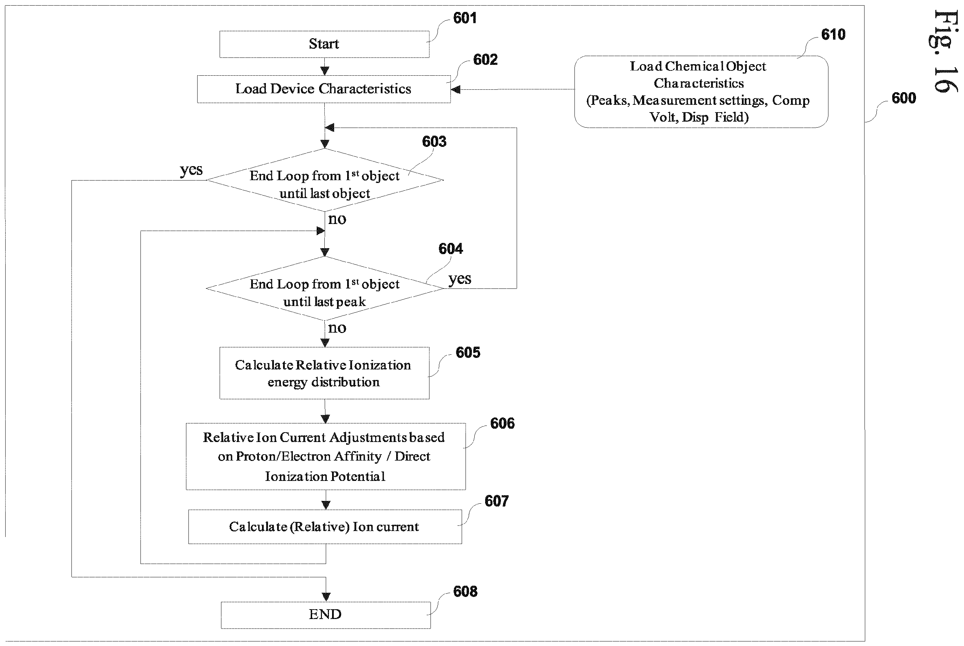

FIG. 16 shows the flow the ion current correction process 600. This process is a process for the case where the target chemical substance is known and cannot be carried out when the target chemical substance is still unknown. However, it is possible to carry out this process after the identification process for chemical substances, described later, has ended and the user has agreed to the result of such identification process and given approval to the specifying of the chemical substance (for refer to the result later on). The process 601 is the entry point for this routine. In the process 602, the specification of the FAIMS detection apparatus that was used for the present measurement and the measured peak characteristics are loaded. After this, in the processes 603 and 604, in the same way as the ranking process in FIG. 13, looping processing is carried out for the ion current peaks that have been detected.

First, in the process 605, the relative energy distribution required for ionization is investigated. In addition, in the process 606, the influence of protons, the potential for direct ionization, and the like are calculated and in the process 607, the ion currents that have been measured are finally corrected by taking such influences into account. When the processing has ended for all of the peaks, in the process 608 the processing ends.

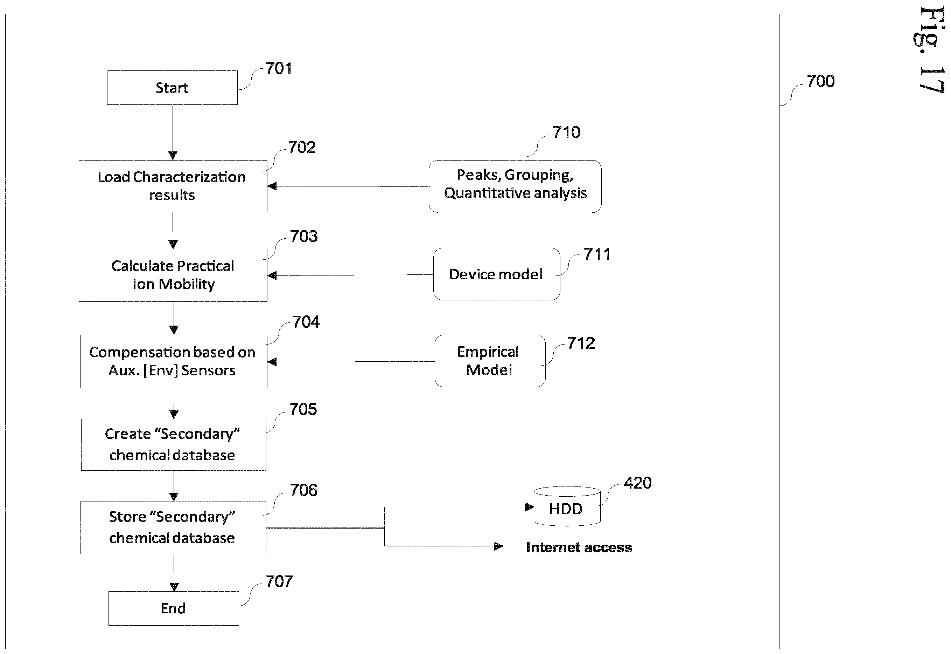

FIG. 17 is a flow showing the process 700 that finds ion mobility in order to specify or identify the target chemical substances. The process 701 is the entry point and in the process 702, the various peak characteristic results that have been found by the various processes thus far are loaded. More specifically, such information includes the peak characteristics and the like that have been detected and grouped. In the process 703, the actual ion mobility is calculated from the measurement results while referring to model data for the device.

More specifically, the Vc potential at which the ion current of the target chemical substance forms a peak when the voltage Vd has been varied is found. Although such value is still the compensation potential Vc at a time when a peak is formed in the ion current, it is possible to evaluate the ion mobility using such value. In precise terms, this is a Vc potential such that an integrated value of the ion mobility in one period is zero with respect to a value produced by adding the Vc potential to the value of the Vd potential in one period. In simple terms, this is decided from the difference between the ion mobility for a value where Vc has been added to a high potential value Vh of the Vd potential and the ion mobility for a value where Vc has been added to a low potential value Vl and the duty ratio of the Vd potential (the ratio of the cycle between Vh and Vl). However, in reality the waveform of the Vd potential will be misshapen and an error is unavoidable.

On the other hand, since the target chemical substances and other chemical substance groups being compared are measured using the same measurement system, the Vc potential value formed by such peaks for the same chemical substances will exhibit the same values without being affected. However, it is not possible to avoid the influence of environmental conditions at the time of measurement as described below. Since the influence of such environmental conditions will also depend on the characteristics of the sensor element used for measurement, model information 711 for the sensor element is loaded and empirical model information 712 for the sensor where the sensor-dependent influence on characteristics has been measured in advance is loaded. Using such data, in the process 704, environmental data at the time with the measurement (more specifically, the air pressure, temperature, humidity, air flow, and the like) is used to carry out a correction process on the calculation results of ion mobility. In the process 705, a secondary database is created using the peak characteristics that have been corrected as a result and such database is stored in the process 706. The secondary database is used to carry out an identification process that specifies the target chemical substances. The process 707 is the end point of this process.

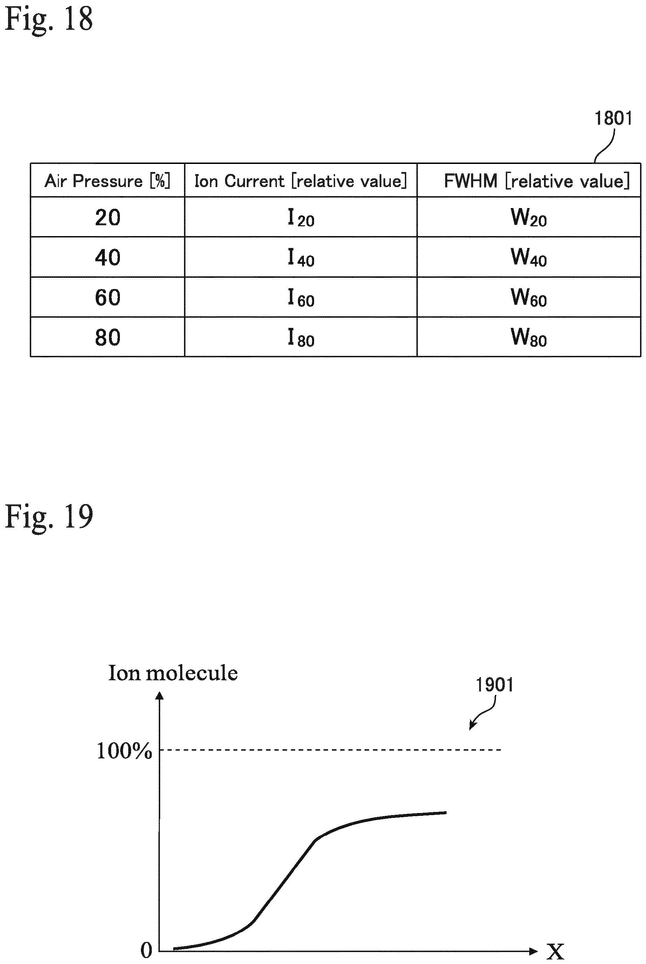

FIG. 18 shows an example of the data 1801 in an empirical model of the sensor device. This is data expressing the transfer function relative to air pressure at the time of measurement. The FAIMS sensor 61 passes ionized molecules (chemical substances) together with air through a minute gap and by applying a Vd potential, causes collisions with one of the gap surfaces so as to have the charge absorbed. The Vc potential that is applied together with the Vd potential favorably compensates the movement of ions so that only ions that have not collided with either of the gap surfaces are detected as an ion current. This means that if the air pressure is low and the density of air molecules themselves falls, it becomes difficult for the ions also to favorably pass through the gap. On the other hand, no matter how high the air pressure is raised, there is a limit on the amount of passing ions, which will not rise above a certain value.

FIG. 19 shows an example of the change in the transfer function 1901 relative to air pressure of this type of sensor device. In this graph, X is a variable, which in this case is air pressure. When the variable X is small, ions are hardly able to pass, and as the variable X increases, there is an increase in the passing ions. However, no matter how much the variable is increased, there is an upper limit on the amount of passing ions and a large amount will be affected by Brownian motion or the Vd potential and will not pass. This transfer function is a characteristic that is unique to the sensor device and is decided by the physical characteristics of the sensor (the gap length of the gap, and the length, shape, and the like of the gap). Such characteristics are measured in advance, the values of the empirical model with respect to various environmental characteristics are found in advance, and the empirical model shown in FIG. 18 is created. Such values are then used to compensate (correct) the actual measurement data (the ion current, FWHM values, and the like).

A specific compensation process (correction process) 700 first determines the environmental conditions to be used as a standard, a transfer function estimated from the values of the empirical model is calculated for when the environmental conditions acquired with (at the time of) the measurement are displaced from the standard values, and measurement results are compensated using such values. As one example, if the standard air pressure is 0.8 atmospheres and the air pressure at the time of measurement is 0.7 atmospheres, the transfer function I₇₀ for the ion current is found by interpolation from the characteristics in FIG. 18 and the measurement results of the ion current are multiplied by (I₈₀/I₇₀).

By compensating the environmental conditions at the time of measurement in this way, it is possible to exclude the influence of the environment. This means that there are fewer restrictions on measurement and it becomes possible to carry out measurement in various locations and measurement environments, which makes it possible to extend the range of applications in which the measurement apparatus can be used.

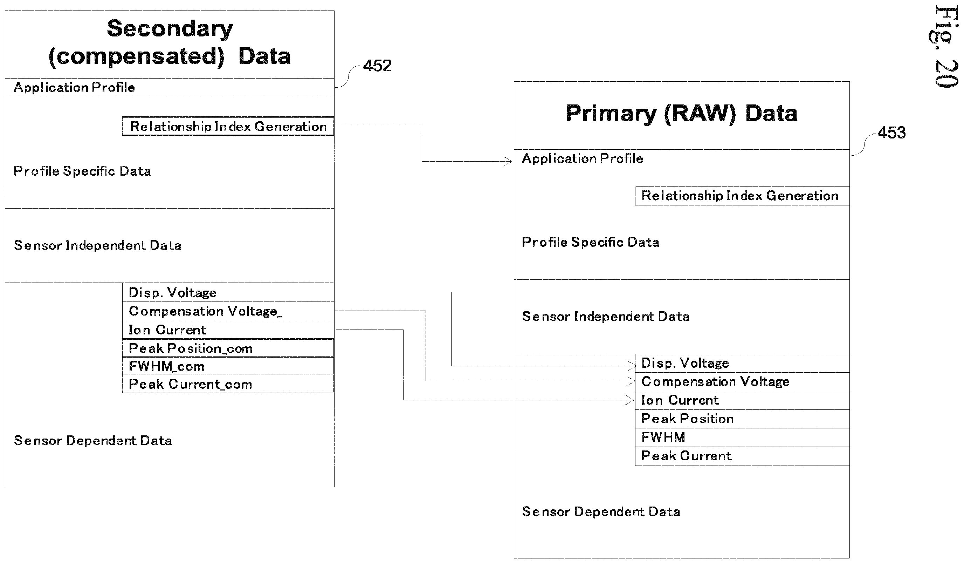

FIG. 20 is a diagram showing the configuration of a two-dimensional database created in this way. The table 453 is the basic (primary) database used as a base and the table 452 shows a secondary database created based on the primary database. The secondary database 452 has fundamentally the same configuration as the primary database 453. However, entries that are composed of a large amount of data, such as measurement results for ion currents are not such values themselves and instead are replaced with pointers showing the location at which such values are stored, resulting in an efficient structure where capacity is not wastefully used.

More specifically, such pointers show corresponding locations in the basic database 453 that is the base for the secondary database 452. On the other hand, the peak position, peak current, FWHM values and the like are values to which correction for the environmental conditions has been applied. Also, the fourth element shows from which database and in what way this secondary database 452 was derived. More specifically, a pointer to the corresponding base database 453 and the software and version information for such software showing the processing content are shown. This is because if the software is improved or the like in the future, it will become possible to calculate a new secondary database from old base data using new and improved processing.

Although the basic database 453 differs to the secondary database 452 in the example in FIG. 20 in that raw data such as ion currents is incorporated, if it is possible to store the raw data in another location and substitute a pointer showing such location, it is possible for the basic (primary) database 453 to have the exactly the same configuration as the secondary database 452.

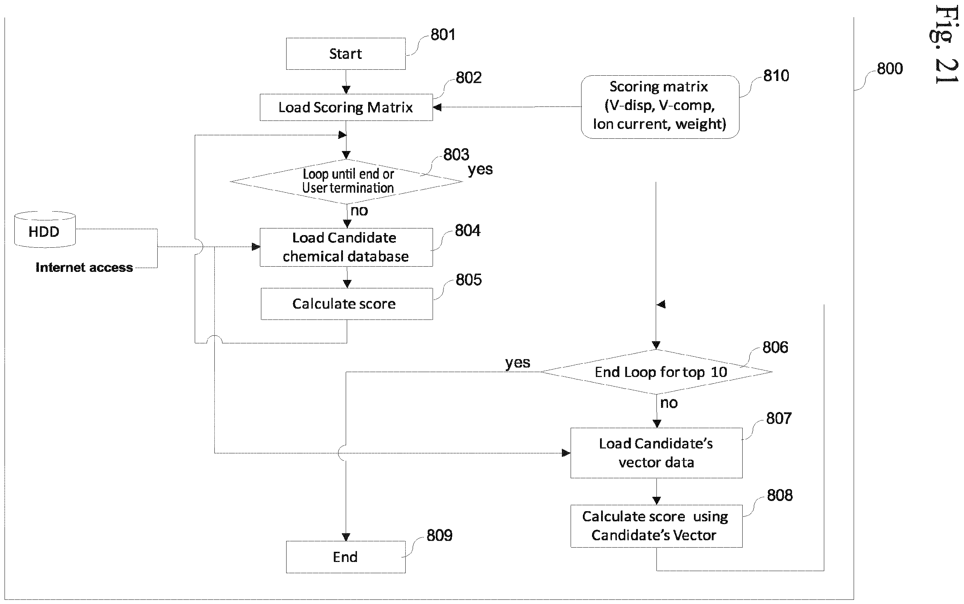

FIG. 21 shows the flow of the identification process 800 that identifies the target chemical substance. The process 801 is the entry point. In the process 802, matrix data showing the characteristics of the target chemical substance is loaded. Such matrix data includes characteristic data to which a horizontal ranking process and a characteristic compensation process have been carried out, and more specifically is a group of especially characteristic data out of the peak characteristic data.

The process 803 is a loop process for carrying out processing for each chemical substance to be compared. The processes 804 and 805 are repeated until they have been carried out for every chemical substance to be compared. Although not shown in this flow, the measurement results are displayed having been sequentially sorted to inform the user. This means it is possible to terminate the processing midway in accordance with a user indication.

Since the field of application, that is, the profile, is decided by the user, and the order of substances to be compared will be decided according to the vertical ranking information in accordance with the profile, substances with the highest score Sc that sufficiently resemble the target substance will normally be compared at first in the order.
However, if the target substance is an extremely rare substance, only substances with a low score Sc will be obtained and the processing will be repeated until substances with low vertical rankings are considered. The field of application can be inferred from an application running on the PC 10 or sounds and images that can be acquired by the PC 10. Accordingly, in place of having the user decide, it is possible for the processor 40 to acquire, as the periphery information PI, information that is necessary to decide the profile from the PC 10.

In the processes 804, 805 and 807, 808, the vertical ranking process is performed. First, in the process 804, data on the chemical substances to be compared is loaded from the database 44 which stores data on various chemical substances. The selection order of chemical substances used at this time is decided by the values of the vertical rankings decided for each profile. That is, in the case of a profile called "Security", for example, poisons that are often investigated to confirm safety are provided with high rank values as the context information Cx, and if the distances are the same, are preferentially selected and compared. In the process 805, a comparison is carried out for the loaded data on chemical substances to be compared, which as examples is the spectrum data SSD itself or the characteristic values CAv, and the data ASD of the chemical substances presently being measured, or the characteristic values thereof. More specifically, the distance between two data is calculated and the result is outputted as the score Sc. In this case, although it is possible to carry out calculation using only the peak positions, it is also possible to take the peak currents into consideration. It is also possible to set or add weightings in advance for the results of the comparison calculation for the respective peaks.

If the processing has ended for all of the objects to be compared or the processing has been terminated according to a user indication, the processing shifts to the process 806, the process 807, and the process 808. The process 806 is a loop for iterative processing on the chemical substances with the ten highest scores Sc calculated in the process 805. The top ten here is a provisional number and it should be obvious that the top 100 or another number may be used.

Although the process 807 that carries out the vertical ranking process performs out the same processing as in the process 802, the data that is loaded this time is data showing the characteristics of the chemical substances to be compared. More specifically, instead of a data matrix composed of characteristic data of an unknown chemical substance, the data is a data matrix composed of characteristic data of a chemical substance to be compared. Since this will differ for each substance to be compared, it is necessary to load data every time. After this, although the same comparison is calculated in the process 808 as in the process 806, the data used for the comparison is selected with the chemical substance that is to be compared as the standard. In this way, the score Sc of a chemical substance referred to from the viewpoint of the unknown target chemical substance and conversely the score Sc of the unknown chemical substance from the viewpoint of a chemical substance being referred to are finally calculated. The different calculations are carried out in this way because, as described below, the identification process can be carried out at high speed while avoiding detection errors. The process 809 is the end point of this process.

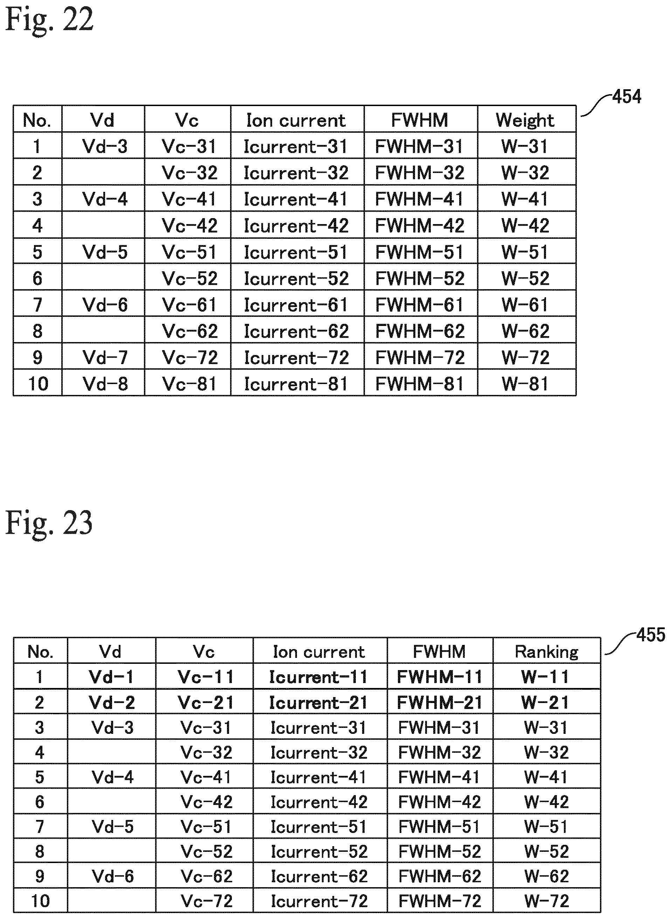

FIG. 22 shows an example of a characteristic data matrix 454 of an unknown chemical substance for which the identification process is about to be carried out. This is a matrix of characteristic data corresponding to the example in FIG. 15 and is composed of data on the peaks with the ten highest ranking values. In the process 802, characteristic data on the chemical substances that correspond to this characteristic data matrix and are to be compared is loaded. If there is no corresponding characteristic data (that is, if no peak is present at such location), "not present" data is added. Although a variety of methods are valid for the calculation of the score Sc, as one example vectors that have the peak position, the ion current, and the full width at half maximum as respectively independent dimensions are considered and the differences between the vector values are calculated. Substances where the total of such values is small are regarded as being closer. Regarding the ion current and the full width at half maximum, since the difference of measured value is too large depended on measured time/date, location and other environment conditions, calculation is carried out having carried out normalization using the maximum values in the respective data matrices. If corresponding peaks are not present, in place of calculating distances, the certain constant value is added to give the equivalent meaning of the distances being large.

Since the score Sc is calculated focused on the peaks, if conversely there is a characteristic whereby no peaks are present, there is the risk that determination will not be carried out correctly. For example, there are cases where there are two chemical substances with very similar characteristics and the difference between the two can be determined according to the presence or absence of a peak in the ion current at a specified Vc potential position relative to a specified Vd potential. However, in the processes 803, 804, and 805 in FIG. 19, since calculation is carried out using a characteristic data matrix of an unknown chemical substance to be specified, in an imaginary case where no peaks are present for an unknown chemical substance to be specified but peaks are present for the reference chemical substances being compared, comparison based on peaks is not possible, which means that such characteristic cannot be utilized.

FIG. 23 shows an example of such a case. Although FIG. 23 is a chemical substance that exhibits similar characteristics to the chemical substance shown in FIG. 22, such substance has clear peaks at Vd-1 and Vd-2 shown on the first and second rows of the table 455. Also, the characteristic peaks at the locations of Vd-7 and Vd-8 that the chemical substance shown in FIG. 22 has are conversely not present. Alternatively, such peaks may be present but are not large peaks and not characteristic. On the other hand, for the chemical substance in FIG. 22, peaks are not present or are present but are small at the corresponding locations of Vd-1 and Vd2. This means that a large difference will not be detected in the processing in the processes 803, 804, and 805 in FIG. 21.

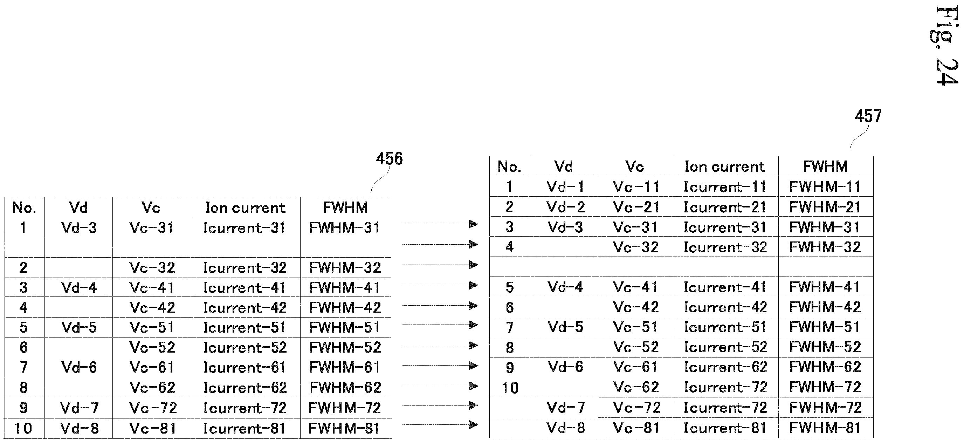

The method of processing at such time will now be described using FIG. 24. The table 456 in FIG. 24 is the characteristic data matrix of the chemical substance that is to be identified in FIG. 22 and the table 457 is the reference characteristic data matrix in FIG. 23. Since the score Sc is calculated in the processes 803, 804, and 805 in FIG. 21 using the characteristic data matrix shown in FIG. 22, as shown by the arrows in FIG. 24, corresponding peaks are found for the peaks present in the characteristic data matrix 456 and the distances between peaks are calculated. However, since peaks corresponding to the peaks present at Vd-1 and Vd-2 on the first and second rows in the same table 557 are not present in the characteristic data matrix 456, the score Sc is not calculated. Also, in the example in this drawing, since the peak at Vc-32 in the characteristic data matrix 456 and the peaks in the characteristic data matrix 457 have different peak positions (Vc) and do not correspond in this case, distances are not calculated and a certain constant value is added. Although the constant values are added in the same way since the peaks at Vd-7, Vd-8 are not present in the characteristic data matrix 457, if peak values are present albeit at small values, it will be possible to calculate distances using such values.

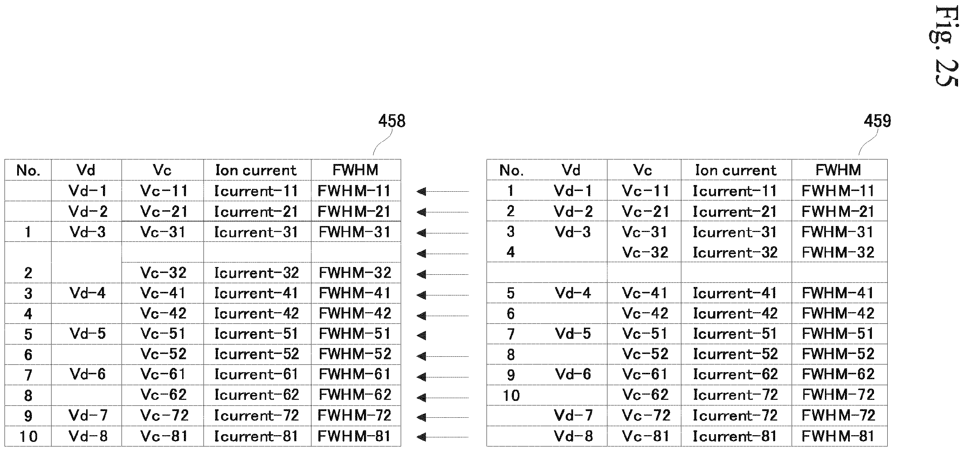

The processes 806, 807, and 808 in the second stage shown in FIG. 21 differ to the first stage in that calculation is carried out using the characteristic data matrix of a reference chemical substance. For this reason, as shown in FIG. 25, some kind of calculation will definitely be carried out for peaks present in the characteristic data matrix 459 of a reference chemical substance. FIG. 25 shows the characteristic data matrix 458 of a chemical substance to be identified and the characteristic data matrix 459 of the reference chemical substance. In this case, since the score Sc is calculated using the matrix 459, calculation is also carried out for the peaks corresponding to Vd-1 and Vd-2 on the first and second rows. Although data corresponding to Vd-1 and Vd-2 is not present in the characteristic data matrix in the matrix 458, data will definitely be present in the original secondary database. This means that it is possible to carry out calculation of the score Sc. Alternatively, a constant value is added to indicate that no peak is present. Although it is possible to exclude peaks that are not present on the reference side and are only present on the target substance side from calculation, in the example in this drawing, calculation is carried out for all peaks.

In this way, for chemical substances that are to be compared and are present in large numbers, the characteristic data matrix of the unknown chemical substance to be identified is used with fixing the items and values for which the score Sc is to be calculated, so that calculation is carried out at high speed. For substances that have a high potential of being the actual substance however, the score Sc is calculated instead using the characteristic data matrix of the chemical substance that is to be compared. By carrying out this processing, it is possible to reduce the amount of processing and to carry out the identification process correctly and at high speed.

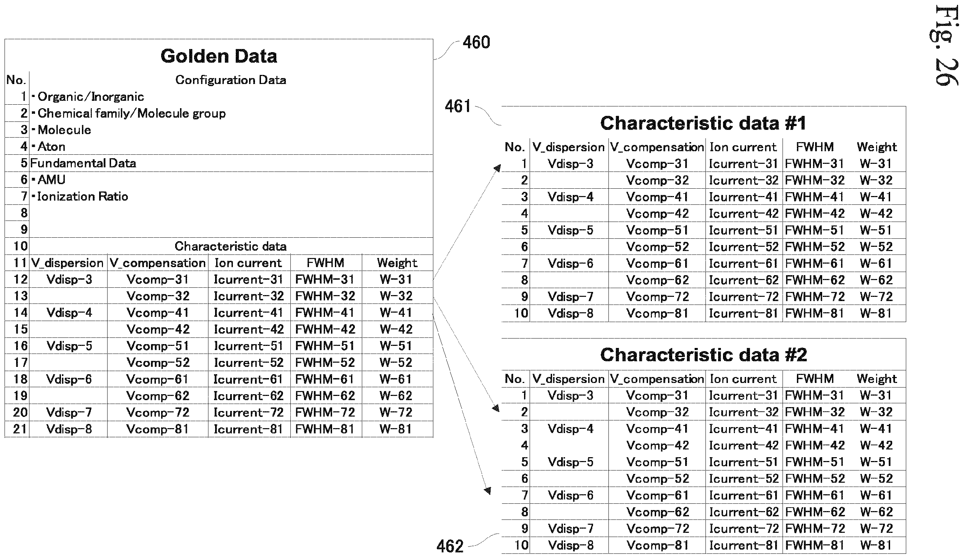

FIG. 26 shows a reference database for specifying a chemical substance. Assume here that this is called the "golden data". The golden data is the data shown by the table 460 in FIG. 26 that includes data showing the composition of such chemical substance, organic/inorganic, chemical substance family, molecules, or atoms, and the like, and data showing the characteristics of such chemical substances, for example, AMU and ionization energy. A characteristic parameter matrix for carrying out the identification process on such chemical substance is also included. In the example in this drawing, data on the peak characteristics of the ion current measured by a FAIMS apparatus is used. In addition, such peak characteristics are not necessarily composed of the same measurement results and in some cases are an aggregate of results measured at a number of different times and/or locations.

In this drawing, peaks for Vdisp-1 are used from the characteristic data shown in the table 461 and peaks for Vdisp-2 are selected from the characteristic data in the table 462. Although data is directly included in the golden data in this diagram, as an alternative it is also possible to substitute pointers to corresponding data (461, 462, or the like). The method of selecting such data is described later. It is not necessary to limit the method of selecting the characteristic parameters to the peak characteristics, and any method expressing the characteristics of the substance may be used.

The golden data may be data with a relatively high ranking value out of the reference data used to identify the chemical substance that is the context information Cx, and it is possible to set ranking values of 0-100 (1-0, on/off), to decide one golden data for a specified chemical substance, and narrow down the number of data referred to when identifying chemical substances.

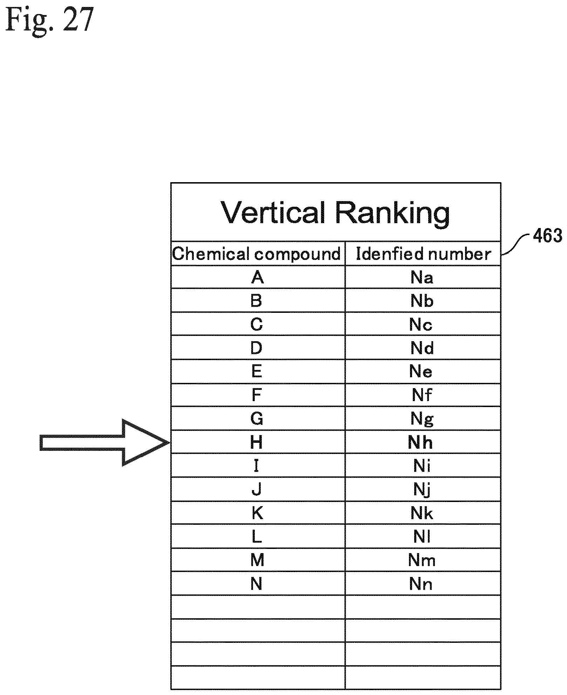

FIG. 27 shows an example of the vertical ranking process. In a case where the identification process is carried out for an unknown chemical substance, according to the order of the vertical rankings 463 found for each profile given by the user (client), various chemical substances that are to be compared are compared with the unknown chemical substance to be identified. Such rankings are decided according to the frequency of reference to the standard database that is referred to. As shown in FIG. 27, in a profile, the number of times (number of referred to for identifications, identification number, reference frequency) each chemical substance has been referred to in the past is counted and included. The column on the left in FIG. 27 is a variety of chemical substances and the column on the right shows the number of times such chemical substances are referred to. As one example, if a chemical substance "H" is referred to, since the chemical substance is yet to be identified at this point and is an unknown substance, the comparison process is carried out in an order decided by the reference frequency in the past. If the substance is identified in the identification process and the user has confirmed the result, one is added to the number of references "Hn" of the substance "H" and the order (ranking value) of the ranking is instantly updated in accordance with such result.

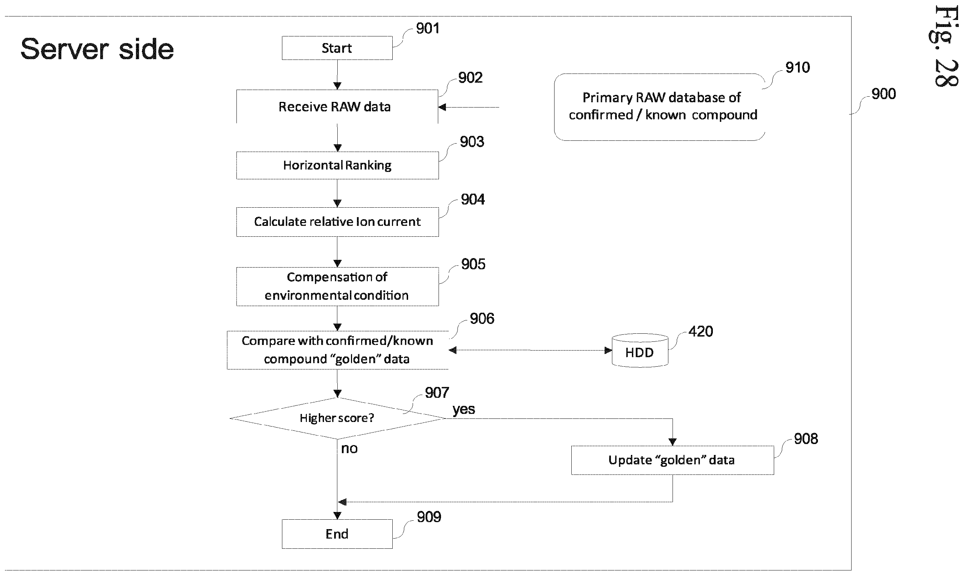

FIG. 28 shows the updating process carried out mainly on the management side for the database 44. As one example, if the database 44 is openly available on a network, this is a database updating process carried out on the server side. Process 901 is the entry point, with this process being launched when the user has approved the result of the identification process. As one example, it is possible to detect a substance selected by the user from the content outputted in order by the monitoring unit 47 and to determine whether the result of the vertical ranking process has been approved from the order of the context information Cx included in such content.

First, in the process 902, the data 910 on the measurement result is loaded. If it is supposed that measurement has been carried out at a location some distance from the server, data will be transferred via a connection such as the Internet. The horizontal ranking process 903, the relative ion current calculation process 904, and the environmental condition correction process 905 are fundamentally the same as the horizontal ranking process 500, the relative ion current calculation process 600, and the environmental condition correction process 700 shown in Fig.4 respectively, so that it is possible to use results that have already been processed, such as by placing the measurement apparatus near the server or carrying out processing on the same computer, it will not be necessary to carry out processing again. However, as with the relative ion current calculation process 600, if calculation is not possible due to the measuring chemical substance being unknown or the processing is being carried out at a distant remote location and it is not possible to make reference to data due to the state of the connection, processing is carried out on the server side. In the process 906, a comparison is carried out with the reference data for the approved chemical substance.

This process is a process that resembles the horizontal ranking process shown in FIG. 14. Although the horizontal ranking process is a process for selecting the most characteristic data out of the measured data, in the processes 906, 907, and 908, the new data that has currently been measured is compared with characteristic data of the data selected for comparison purposes (the golden data, the stocked spectrum data SSD, or the characteristic values CAv thereof), and if the new data produces a high score Sc (if the data is more characteristic or signature due to having a large ion current value or the like), a process (the process 908) that replaces such element in the golden data being used in the comparison with the new data is performed. In this way, since updating to more characteristic or signature data is carried out every time a new measurement result is obtained, more refined golden data is obtained every time measurement is done. Instead of replacing the golden data, it is also possible to carry out processing that controls the ranking values for the context information Cx so as to increase the ranking values of more characteristic data. The process 909 is the end point of this process.

The updating of the golden data does not necessarily use a method of replacing with data with the highest score Sc. Depending on the application, there may be cases where averaged data is better. In such a case, by collecting, after the identification process, only data where the result has been approved, finding averages of values such as the peak position and the ion current value, and updating the golden data to such averaged values. In addition, at such time, by excluding data that is separated by a distance of three times the variance value or more from the average value, it is possible to prevent become meaningless of the golden data due to data that has been erroneously approved.

Also, although it is necessary to store all of the data in question in order to calculate the average values, to avoid this, it is possible, if the number of data totaled so far is "n", to add a value produced by dividing the newly obtained value by "(n+1)" and a value produced by multiplying the average value so far by "n/(n+1)". When the value of "n" has become rather large (for example, 1000), the value of "n" may be fixed. If the value of "n" is fixed, the contribution of old data will gradually fall and the average value will approach an average value that uses only new values.

Note that the updating process for the golden data carried out by the updating unit 48 is extremely important in terms of quality management of the database. This means that control over the authority to carry out the updating process is also important. More specifically, for a specified field and/or a specified profile, it is possible to carry out processing that gives authority not just to a manager of the database but also to a specified user who has sufficient experience and knowledge or gives authority to a user for a database that is managed and processed at the user's own responsibility. By carrying out such processing, it is possible to give free authority over a database that the user manages by himself/herself and to externally protect such database.

It is also possible for a single user or a plurality of specified users to construct and manage a database. As a result, when other normal users make use of such database, it is possible for the specified users to control access and to carry out a billing process. It is also possible to distribute the profit obtained in this way among the specified users.

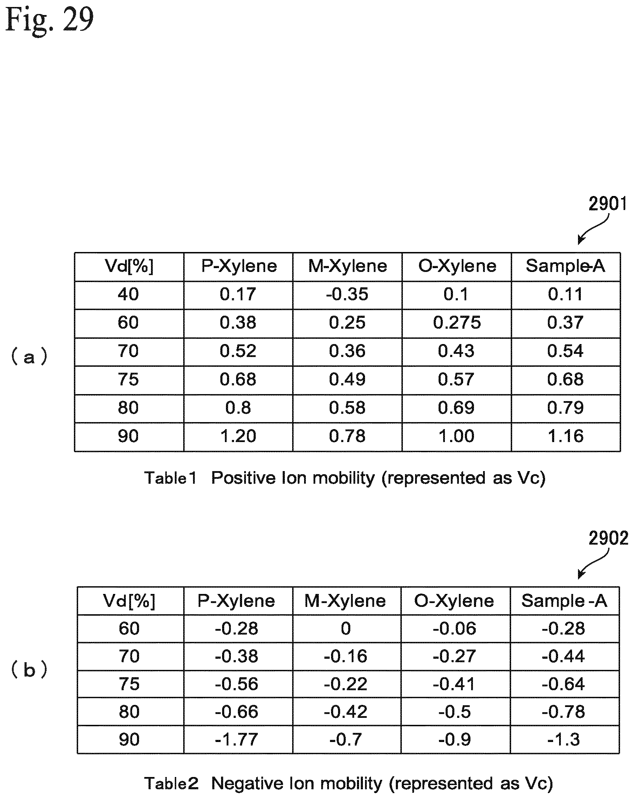

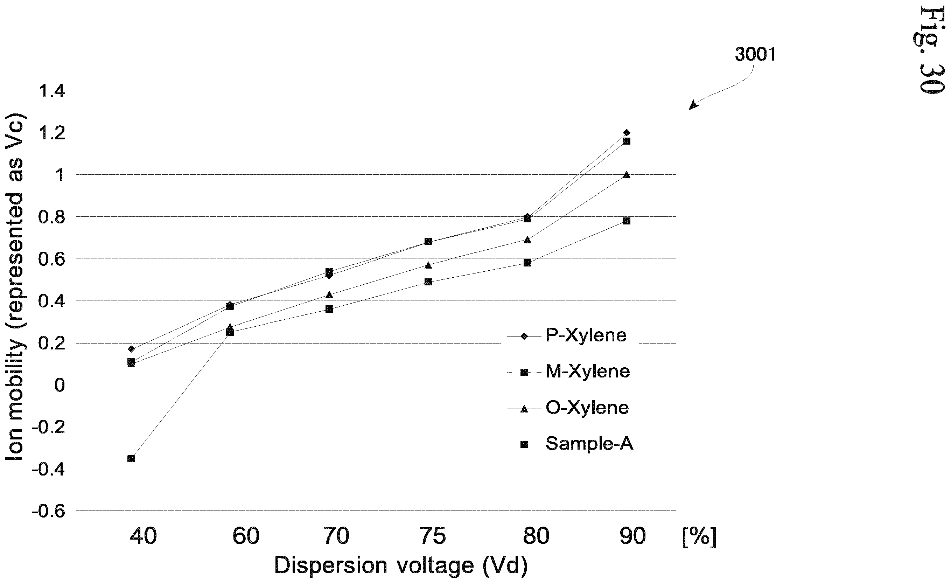

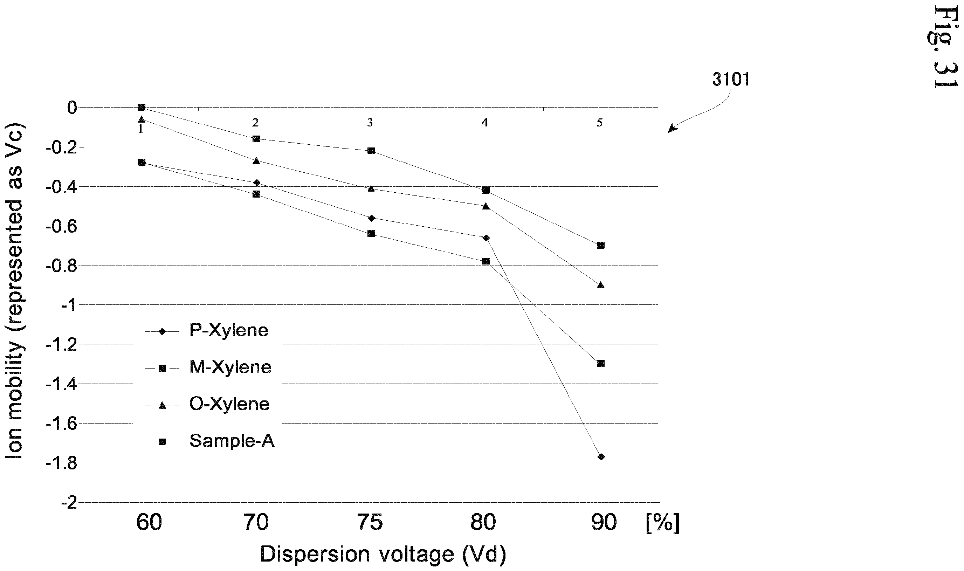

The table 2901 and the table 2902 in FIG. 29 are examples of ion mobility of an unknown chemical substance calculated in this way. The table 2901 in FIG. 29(a) is a calculation result for ion mobility of positive ion currents. On the other hand, the table 2902 in FIG. 29(b) is a calculation result for ion mobility of negative ion currents. Here, ion mobility is expressed by the Vc potential. More specifically, this is the value of the Vc potential that forms a peak current for a specified Vd potential. In this measurement, measurement is carried out for isomer P-Xylene, M-xylene, and O-xylene that are known xylenes (indicated as Xylene in the table), and the unknown sample A, and ion mobility is shown as the peak positions of the ion currents expressed in these measurement results. These results are shown in graph form in FIG. 30 and FIG. 31.

In the graph 3001 shown in FIG. 30 and the graph 3101 shown in FIG. 31, values of Vd potential are used on the horizontal axis and the Vc potential at which peaks in the ion current appear are used on the vertical axis. As expressed in the drawings, the unknown sample A substantially matches the characteristics of P-xylene, which shows that the unknown sample A should be P-xylene. In this way, it is possible to calculate ion mobility precisely for even an unknown chemical substance and as a result, it is possible to precisely specify (identify) the chemical substance in question.

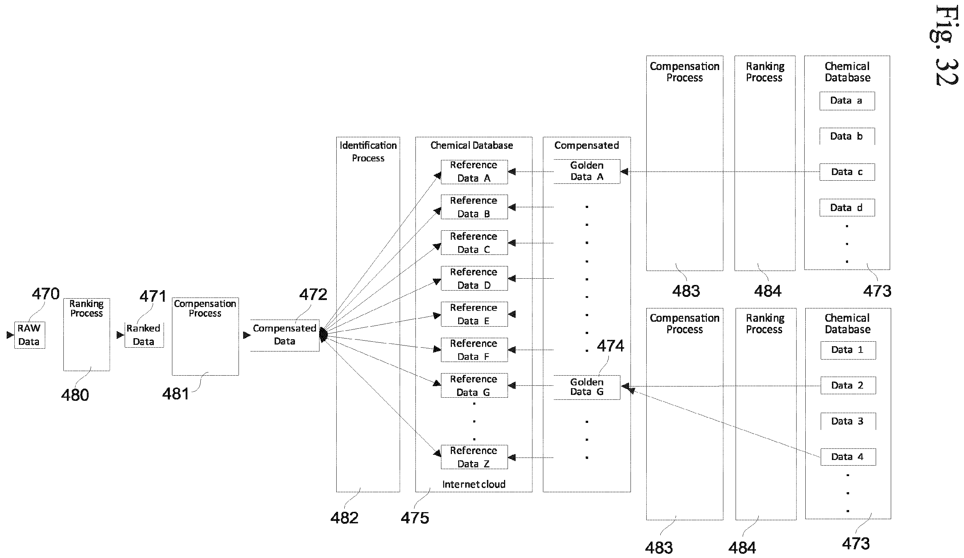

FIG. 32 shows the identification process for chemical substances from another viewpoint. The data 470 of the newly obtained measurement results of a chemical substance are converted into the data 471 that has been ranked by the ranking process 480 and by further carrying out the compensation process 481, data 472 for the identification process is obtained. Such data is compared with the data of a standard reference chemical substance group 475 and similarity scores Sc are calculated in the process 482. Substances that are the closest (i.e., have the highest score Sc) become the candidates for such substance. On the other hand, on the server side, out of the large amount of past measurement data 473 in which a substance has been identified, the ranking process 484 and the compensation process 483 are carried out in the same way, and data with the most prominent characteristics is collected from such data to create the golden data.

Such golden data forms the actual or practical reference chemical substance group. Accordingly, the context information Cx specified or supported by the golden data 474 with a high score Sc is information with a high overall score Rs. In this way, by carrying out the compensation process on the measurement data and the reference data in the same way, the influence of environmental conditions and the like is removed, which makes it possible to realize a more precise and more accurate identification process. Although reference data needs to be specially prepared at first, such data is reviewed every measurement and will be replaced by more characteristic or signature data, so that the reference data will be automatically improved.

As described in detail above, according to the present invention, it is possible to exclude the influence of environmental conditions so that measurement precision is improved. In addition, since the present invention is hardly affected by environmental conditions at the time of measurement compared to a conventional measurement apparatus for chemical substances, it is possible to freely use the present invention in environments with a wider range of conditions. This means that it is possible to incorporate the present invention into products used by normal users and consumer products.

As described above, since according to the present invention, the data obtained from the measuring chemical substance and data on the reference chemical substances are compared having been compensated exactly the same process, it is possible to precisely carry out a specifying process (identification process) for the chemical substance being measured. In addition, there is a further advantage in that since the processing is exactly the same, it is possible to use all or part of the measured data as new data for comparison purposes, so that it is possible to easily update the database. This is especially useful in cases where the user constructs a new database using data measured by the user himself/herself. It is also possible to automatically realize the automatic updating of the database under constant conditions.

According to the present invention, since data that characterizes the chemical substance being measured (i.e., characteristic data) is selected and ranked out of the measured data, it is possible to carry out the identifying process for the chemical substance efficiently and at high speed. Also, since it is possible to exclude data with few characteristics, it is possible as a result to stored data efficiently, so that a small amount of data is sufficient.

According to the present invention, the data on the measurement results is stored in the basic or primary database, and even if the processing format is updated or improved in the future, it will be possible to obtain new data by merely carrying out the processing again without having to measure once more. In addition, since characteristic or signature points are extracted from the basic database in the identification process and a secondary database composed of compensated data is used, it is possible to reduce the capacity required to store the database.

According to the present invention since comparisons are made in the identification process using values such as the magnitude of the ion current and the full width at half maximum of the ion current and not just the peak positions of the ion current, the identifying of chemical substances is carried out precisely. Also, by carrying out two processing loops, it is possible to carry out processing at high speed while preventing erroneous operations (misidentification).

According to the present invention, by carrying out the vertical ranking process for each application, it is possible to set an optimal order for the identification in each application (that is, an optimal order for the chemical substances that are to be compared in the identification process), which makes it possible to optimize the database for each application. By doing so, it is possible to increase the speed of the identification process. In addition, the vertical ranking process is automatically updated every time the user carries out the identification process, so that optimal values are always held.

According to the present invention, since the database (golden data) of reference chemical substances used in the identification process is constructed by collecting together the most characteristic or signature data from data that is the same chemical substance but is measured at different times and/or locations, it is possible to realize an identification process with higher precision. As another embodiment of the present invention, it is also possible to average the data measured at different times and/or at different locations for the same chemical substance so as to produce data where typical reference data has been collected together.

According to the present invention, it is possible to control the authority over the updating process of the reference chemical substance database (the "golden data") used in the identification process. By doing so, it is possible to realize a database structure that is unique to the user and to give authority in particular to users with plenty of experience and knowledge in particular and have such users cooperate in the constructing of the database.

It is possible to have a plurality of users cooperate to construct a database and possible to limit access over the database constructed in this way to other normal users, to carry out billing, and to distribute the profit.

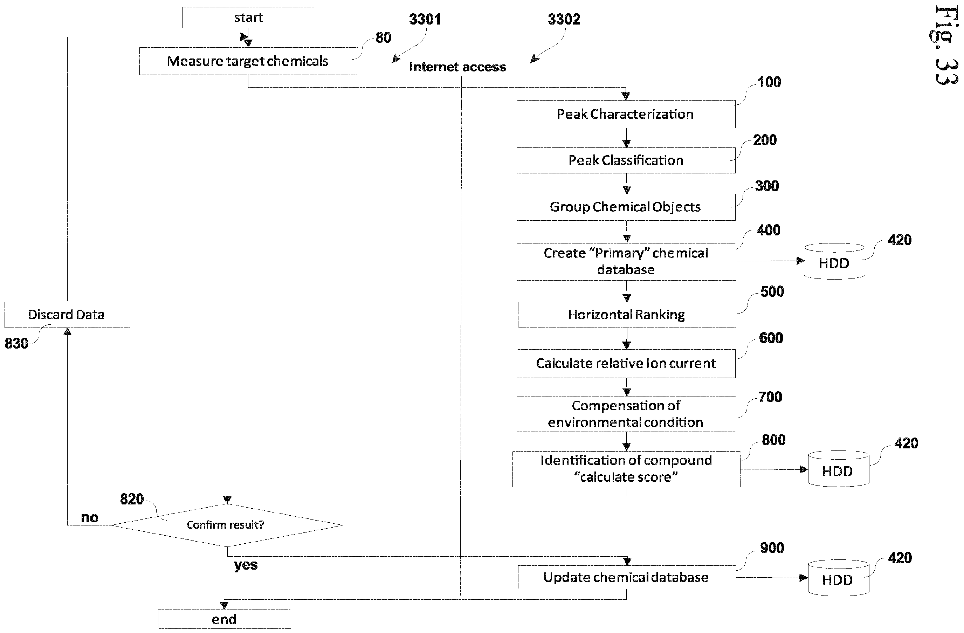

Another embodiment of the present invention will now be described using FIG. 33. FIG. 33 shows the general flow of this other embodiment and blocks with the same functions as FIG. 4 have been assigned the same numerals. Although all of the functions are processed by a single computer in the embodiment in FIG. 4, in the embodiment in FIG. 33, an entire system is composed of a terminal apparatus 3301 that directly controls the FAIMS 61 including the OLP 40; and a server apparatus 3302 that is connected via the Internet with the terminal apparatus. On the terminal, only the measurement process 80 that controls the FAIMS 61 to measure the characteristics, the approval process 820 that confirms the measurement result, and the invalidation process 830 that invalidates the measurement result if the measurement result is unsatisfactory are carried out, with other processes being carried out on the server side. In this example, although the processing from the process 100 onwards is carried out on the server side, the present invention is not necessarily limited to this configuration and it is also possible to assign processing up to the process 100 to the terminal side.

In the present embodiment, since heavy processing is not carried out on the terminal 3301 side, it is possible to use a low-cost terminal (personal computer) with poor performance and a hard disk drive or the like for storing data is also unnecessary. There is a further advantage in that less computer memory is required.

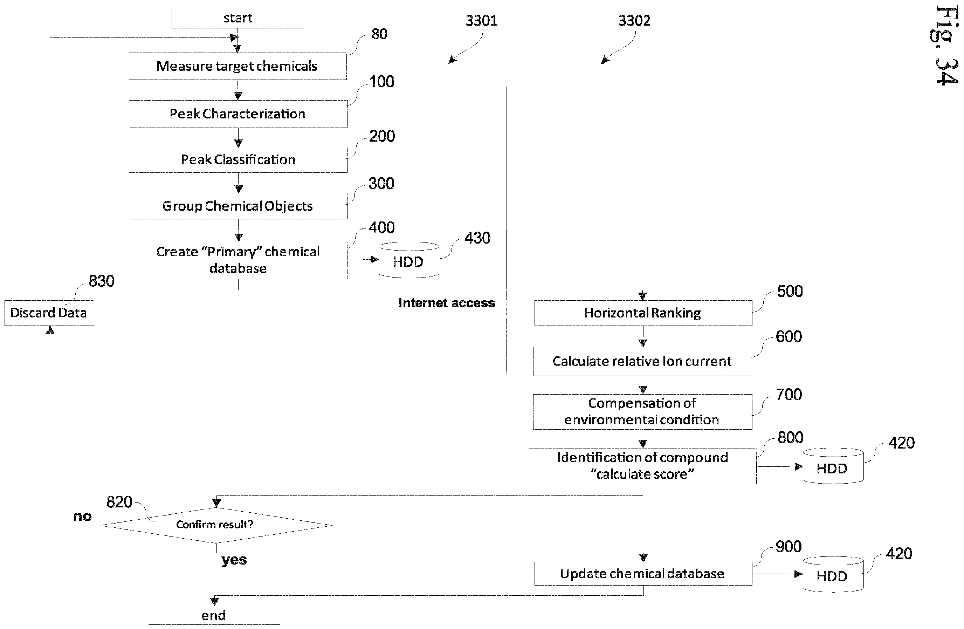

A third embodiment of the present invention will now be described using FIG. 34. In this case also, in the same way as the embodiment in FIG. 33, processing is divided between the terminal side 3301 and the server side 3302. In this drawing, blocks with the same functions as FIG. 4 are assigned the same numerals. As shown in FIG. 33, processing from the measurement process 80 that controls the FAIMS apparatus to measure the characteristics to the process 400 that creates the base database is assigned to the terminal side. Also, the obtained base data is stored on the terminal side in a local hard disk apparatus 430. The identification process and the like are assigned to the server side.

In the present embodiment, compared to the first embodiment, since there is no identification process or the like that is heavy processing, there is the merit that it is possible to realize the system with a terminal with lower performance. Also, since the measurement data itself is stored and managed on the terminal side, there is a further merit in that it is possible for some degree of processing to continue on the terminal side even if a problem such as a disconnection of the line occurs.

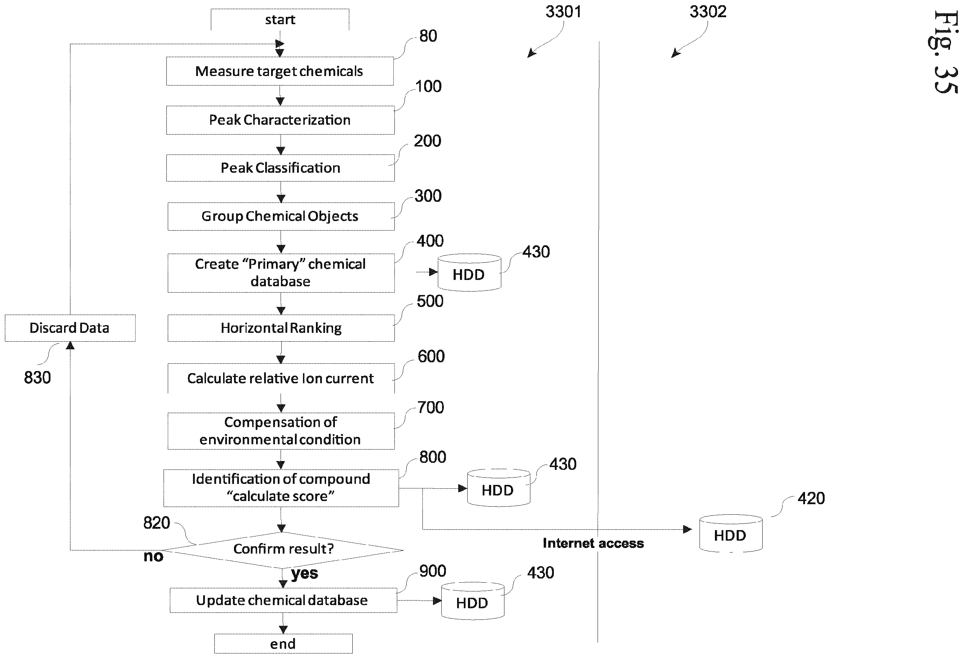

A fourth embodiment of the present invention will now be described using FIG. 35. In this embodiment also, processing is divided between the terminal side 3301 and the server side 3302 in the same way as in FIG. 33 and FIG. 34. In this drawing, blocks with the same functions as FIG. 4 are assigned the same numerals. In the embodiment in FIG. 35, most of the functions are carried out on the terminal side. For this reason, high process performance is necessary on the terminal side. However, since all of the data is stored and managed on the terminal side and not just the measurement results, it is possible to realize a high performance in maintaining confidentiality. Since the identification process is also carried out on the terminal side, it is also completely unnecessary to send the measured data to the outside. The reference data that is necessary for the identification process is acquired via the Internet from a server. The result of such process can also be stored on the terminal side.

According to the present invention, it is possible to flexibly configure the construction of the entire system as necessary and to flexibly select the optimal configuration in keeping with the necessary performance and price. In the same way, it is possible to select the method of managing the measured data and the type of data accessed from outside and possible to realize a high performance in maintaining confidentiality as necessary.

It is also possible to locally store the reference database that is necessary for the identification process for chemical substances on the terminal side as necessary (in keeping with price), which means also possible to flexibly change the configuration of the database itself.

According to the present invention, from the measurement results obtained from the FAIMS apparatus, what group of peaks has been derived from the same chemical substance is automatically identified. In addition, since more accurate ion current values are calculated by excluding the influence of environmental conditions at the time of measurement, it is possible to carry out the identifying of the target chemical substance with higher precision. By doing so, it is possible for an operator who is not sufficiently proficient for a FAIMS apparatuses and/or chemical substances to use such apparatuses, which greatly improves convenience.

According to the present invention, since the measurement results are expressed having been automatically classified into chemical substances, it is possible to produce stable results without depending on the ability of the person operating the apparatus. By doing so, it is possible to prevent misinterpretations. There is also less need to become proficient with the apparatus. As a result, it is possible to reduce the time taken by measurement. Such effect of the present invention is also achieved when a plurality of chemical substances are mixed, and since the peaks derived from a plurality of chemical substances are displayed having been classified, it is easy to judge the measurement results and possible to prevent misjudgments. Since the influence of environmental conditions at the time of measurement can also be compensated for, it is possible to specify target chemical substances with higher precision. Also, since more characteristic or signature data is selected out of the measurement data and stored as ranking information (order information), it is possible to carry out the identifying or specifying of chemical substances at higher speed. It is also possible to easily update the data that is the standard for the identification process for chemical substances and to easily construct a database. In addition, since it is possible to freely distribute the processing via a network instead of just having a measurement terminal carry out processing by itself, it is possible to adjust the price and processing speed of the apparatus in keeping with the needs of customers.

Although the present invention has been described above with an apparatus (system) that uses a FAIMS as an example, it is also possible to apply the present invention in the same way to a measurement apparatus where multi-dimensional measurement results are obtained. This is especially favorable for a product in which a FAIMS apparatus or a similar chemical substance measuring apparatus is applied. Conceivable examples of such product include a water quality testing apparatus that detects whether fine amounts of chemical substances are included in water, a narcotics detecting apparatus capable of detecting minute amounts of narcotic substances, and a health monitoring apparatus that investigates the state of a disease from the breath of a patient.

In the above description, there is disclosed, for the apparatus where particles or molecules of the measured object are ionized, are passed together with air through a gap to which an asymmetrical electric field is being applied, and the applied electric field is changed to measure changes in the passing ion current so as to specify the characteristics of a chemical substance, in such chemical substance analyzer apparatus, by measuring the environmental conditions at the time of measurement, the measurement results can be compensated using a transfer function for the environmental conditions that has been measured in advance.

As the environmental conditions, it is desirable to use one, some or all of the air pressure, air flow, temperature, and humidity at the time of or acquired with the measurement. When carrying out the identification process for the chemical substance to be measured, it is desirable to carry out a compensation process for the environmental conditions on the measurement data of the chemical substances that are to be compared, which has been provided in advance. If the identification process result for the chemical substance being measured has been approved, it is desirable for some or all of the approved measurement data on the chemical substance to be measured to be substituted for some or all of the data on the identified chemical substances which is referred to in comparisons. As the measurement data of the chemical substance to be measured, it is desirable to use the Vc voltage (hereinafter referred to as the "peak position") where the ion current forms a peak for a specified Vd voltage, the peak value of the ion current at such time, and the full width at half maximum of the ion current expressed at such Vc voltage.

When carrying out the identification process on the chemical substance to be measured, it is desirable to associate the peak positions that have been measured and peak positions to be compared/referred to, and then calculate the distances between one, some, or all of the peak positions, the peak values of the ion currents, and the full width at half maximum of the ion currents in the data that has been measured and the data to be compared/referred to and use such results to carry out the identification process.

When carrying out the identification process on the measuring chemical substances, it is desirable to calculate, after identifying corresponding peak positions to be compared based on the measuring peak positions, the distances (theoretical distances) between some or all of the peak positions, the peak values of the ion current, and the full widths at half maximum of the ion current of the measured data and the comparing data, to then calculate, after identifying corresponding peak positions in the measured data based on the comparing peak positions, the distances between some or all of the peak positions, the peak values of the ion current, and the full widths at half maximum of the ion current of the measured data and the comparing data, and to then carry out the identification process using the two sets of calculated values.

It is also preferable to compare values of one or both of the peak value and the full width at half maximum of the ion current out of the peaks in the measured data for the target chemical substances, to select a plurality of peaks using such results, and to carry out the identification process using data information on such peaks.

Also, the above description discloses an analyzer apparatus for chemical substances that is characterized by counting, for the chemical substance groups to be compared, the number of times each chemical substance has been judged by the identification process to be the same as the target chemical substance and selecting candidates for the identification process in descending order of such count value.

It is desirable to prepare a profile that is suited to the field of application in advance, and within each profile, to count the number of times each chemical substance has been judged by the identification process to be the same as the target chemical substance and to select candidates for the identification process in descending order of such count value.

Also disclosed is a database of an analyzer apparatus for chemical substances that includes data on measured data from before processing, characteristic data extracted from the measured data including some or all of the peak positions of the ion current, peak values of the ion current, and the full widths at half maximum, basic or primary data of chemical substances including data on environmental conditions from when the measured data was measured, and secondary data including characteristic data which is based on the primary data and obtained by compensating for the environmental conditions.

When carrying out the identification process for chemical substances to be measured, it is desirable to use the secondary data without using the base data. When carrying out the identification process for chemical substances to be measured, it is desirable to obtain reference data on the chemical substance groups to be compared by combining or averaging a plurality of measurement data for which identification has done or ended and the results of such identification have been approved. When the identification process has been completed for a chemical substance to be measured and the result of such process has been approved, it is desirable for some or all of the data in the measurement results to be substituted for some or all of the reference data for chemical substances to be referred to in comparisons. In cases where following completion of the identification process for a chemical substance to be measured and approval of the result of such process, some or all of the data in the measurement result is substituted for some or all of the reference data for chemical substances to be referred to in comparisons, it is desirable to manage authority over the updating process of the reference data on a user-by-user basis for such apparatus.

In the above description, there is disclosed, for an apparatus where molecules of a measured object are ionized, are passed together with air through a gap to which an asymmetrical electric field is being applied, and the applied electric field is changed to measure changes in the passing via ion current so as to specify the characteristics of a chemical substance, an analyzer apparatus for chemical substances that is characterized by including: a terminal apparatus that collects measurement data by controlling a measurement apparatus; and a server apparatus that is connected to the terminal apparatus by a communication path and manages a database of measurement results.

It is desirable to change the distribution of processing between the server apparatus and the terminal apparatus in accordance with the processing performance of the terminal apparatus. It is desirable to provide a database of local measurement results on the terminal side, to provide a global database on the server side, and to access the server if the data in the database on the terminal side is insufficient and load data from the server.

## Claims

1. A system that provides, in response to a search request including spectrum data obtained from a sensor, content associated with context information by a client or an application, the context information being estimated from the spectrum data, the system comprising:
a database including a plurality of context information, a plurality of stocked spectrum data and first ranking scores between each of the plurality of context information and each of the plurality of stocked spectrum data;
a comparison unit that calculates a second score for the stocked spectrum data with respect to the obtained spectrum data; and
a unit that outputs output data so that content associated with context information with a high first ranking score for stocked spectrum data for which a high second score has been calculated by the comparison unit is selectable at a client in descending order of an overall evaluation including the second score and the first ranking score.

2. The system according to claim I, further comprising:
a unit acquiring information on content selected by the client out of the content included in the output data; and
an updating unit that adds the obtained spectrum data to the database with a first ranking score to the context information associated with the selected content.

3. The system according to claim 1 or 2,
wherein the database includes characteristic values of the stocked spectrum data, and
the comparison unit includes a function that assigns second rankings to characteristic values included in the obtained spectrum data and calculates the second score from a characteristic value with a high second ranking.

4. The system according to claim 3,
wherein the search request includes periphery information including environmental conditions acquired with the obtained spectrum data, and
the comparison unit includes a function that corrects at least one of characteristic values of the obtained spectrum data and characteristic values of the stocked spectrum data according to the periphery information, or a function of selecting spectrum data to be compared out of the stocked spectrum data.

5. The system according to any of claim 1 to 3,
wherein the search request includes periphery information including environmental conditions acquired with the obtained spectrum data,
the database includes information that assigns rankings to the plurality of context information for at least one of the environmental conditions, and
the unit that outputs includes a unit that generates the output data so that content associated with context information is selectable at the client in descending order of the overall evaluation that further includes the ranking for the at least one environmental conditions.

6. The system according to any of claim 1 to 5,
wherein the spectrum data is data produced by measuring ion current when molecules of the measuring object are ionized and passed together with air through a gap to which an asymmetrical electric field is applied and conditions of the applied electric field are changed.

7. The system according to any of claim 1 to 6,
wherein the context information includes chemical substance related information.

8. The system according to any of claim 1 to 7,
further comprising a unit that receives the search request from a terminal equipped with the sensor, and
wherein the unit that outputs includes a unit that transmits the output data to the terminal that is a source of the search request.

9. A method comprising providing, by a content supplying apparatus, in response to a search request including spectrum data obtained from a sensor, content associated with context information by a client or an application, the context information is estimated from the obtained spectrum data,
the content supplying apparatus including a database including a plurality of context information, a plurality of stocked spectrum data and first ranking scores between each of the plurality of context information and each of the plurality of stocked spectrum data, and
the providing content including:
calculating a second score for the stocked spectrum data with respect to the obtained spectrum data; and
outputting output data with rankings so that content associated with context information with a high first ranking score for stocked spectrum data for which a high second score has been calculated is selectable at a client in descending order of an overall evaluation including the second score and the first ranking score.

10. The method according to claim 9,
wherein the providing content further includes:
acquiring information on content selected by the client out of the content included in the output data; and
adding the obtained spectrum data to the database with a first ranking score to the context information associated with the selected content.

11. The system according to claim 9 or 10,
wherein the database includes characteristic values of the stocked spectrum data, and
the calculating a score includes assigning second rankings to characteristic values included in the obtained spectrum data and calculating the second score from a characteristic value with a high second ranking.

12. The method according to claim 11,
wherein the search request includes periphery information including environmental conditions acquired with the obtained spectrum data, and
the calculating a score includes correcting at least one of characteristic values of the obtained spectrum data and characteristic values of the stocked spectrum data according to the periphery information, or selecting spectrum data to be compared out of the stocked spectrum data.

13. The method according to any of claim 9 to 11,
wherein the search request includes periphery information including environmental conditions acquired with the obtained spectrum data,
the database includes information that assigns rankings to the plurality of context information for at least one of the environmental conditions, and
the outputting includes generating the output data so that content associated with context information is selectable at the client in descending order of the overall evaluation that further includes the ranking for the at least one environmental conditions.

## Patentansprüche

1. System, das als Reaktion auf eine Suchanfrage, die von einem Sensor erhaltene Spektrumsdaten beinhaltet, Inhalte bereitstellt, die mit Kontextinformationen durch einen Client oder eine Anwendung verknüpft sind, wobei die Kontextinformationen aus den Spektrumsdaten geschätzt werden, wobei das System umfasst:
eine Datenbank, die eine Vielzahl von Kontextinformationen, eine Vielzahl von gelagerten Spektrumsdaten und erste Ranglistenwerte zwischen jeder der Vielzahl von Kontextinformationen und jeder der Vielzahl von gelagerten Spektrumsdaten enthält;
eine Vergleichseinheit, die einen zweiten Wert für die gelagerten Spektrumsdaten in Bezug auf die erhaltenen Spektrumsdaten berechnet; und
eine Einheit, die Ausgabedaten so ausgibt, dass Inhalte, die Kontextinformationen mit einem hohen ersten Ranglistenwert für gelagerte Spektrumsdaten zugeordnet sind, für die von der Vergleichseinheit ein hoher zweiter Wert berechnet wurde, bei einem Kunden in absteigender Reihenfolge einer Gesamtbewertung einschließlich des zweiten Wertes und des ersten Ranglistenwertes wählbar sind.

2. System nach Anspruch 1, ferner umfassend:
eine Einheit, die Informationen über den vom Kunden ausgewählten Inhalt aus dem in den Ausgabedaten enthaltenen Inhalt erfasst; und
eine Aktualisierungseinheit, die die erhaltenen Spektrumsdaten der Datenbank mit einem ersten Ranglistenwert den Kontextinformationen, die dem ausgewählten Inhalt zugeordnet sind, hinzufügt.

3. System nach Anspruch 1 oder 2,
wobei die Datenbank Kennwerte der gelagerten Spektrumsdaten enthält, und
die Vergleichseinheit eine Funktion beinhaltet, die zweite Bewertungen Kennwerten der erhaltenen Spektrumsdaten zuordnet und den zweiten Wert aus einem Kennwert mit einer hohen zweiten Bewertung berechnet.

4. System nach Anspruch 3,
wobei die Suchanfrage Peripherieinformationen einschließlich Umgebungsbedingungen beinhaltet, die mit den erhaltenen Spektrumsdaten erfasst wurden, und
die Vergleichseinheit eine Funktion beinhaltet, die mindestens einen der Kennwerte der erhaltenen Spektrumsdaten und der Kennwerte der gelagerten Spektrumsdaten gemäß den Peripherieinformationen korrigiert, oder eine Funktion zum Auswählen der zu vergleichenden Spektrumsdaten aus den gelagerten Spektrumsdaten.

5. System nach einem der Ansprüche 1 bis 3,
wobei die Suchanfrage Peripherieinformationen einschließlich Umgebungsbedingungen enthält, die mit den erhaltenen Spektrumsdaten erfasst wurden,
die Datenbank Information enthält, die der Vielzahl von Kontextinformationen für mindestens eine der Umgebungsbedingungen Bewertungen zuweist, und
die ausgebende Einheit eine Einheit beinhaltet, die die Ausgabedaten so erzeugt, dass Inhalte, die mit Kontextinformationen verknüpft sind, beim Client in absteigender Reihenfolge der Gesamtbewertung wählbar sind, die ferner das Bewerten für die mindestens eine Umgebungsbedingung beinhaltet.

6. System nach einem der Ansprüche 1 bis 5,
wobei die Spektrumsdaten Daten sind, die durch Messen von Ionenstrom erzeugt werden, wenn Moleküle des Messobjekts ionisiert und zusammen mit Luft durch einen Spalt geleitet werden, an den ein asymmetrisches elektrisches Feld angelegt wird und Bedingungen des angelegten elektrischen Feldes geändert werden.

7. System nach einem der Ansprüche 1 bis 6,
wobei die Kontextinformationen Informationen über chemische Substanzen beinhalten.

8. System nach einem der Ansprüche 1 bis 7,
ferner umfassend eine Einheit, die die Suchanfrage von einem mit dem Sensor ausgestatteten Endgerät empfängt, und
wobei die ausgebende Einheit eine Einheit beinhaltet, die die Ausgabedaten an das Endgerät überträgt, welches Ursprung der Suchanfrage ist.

9. Verfahren, bestehend aus dem Bereitstellen von Kontextinformationen durch eine Inhaltszuführungsvorrichtung als Reaktion auf eine Suchanfrage, die von einem Sensor erhaltene Spektrumsdaten enthält, sowie Inhalte, die mit Kontextinformationen durch einen Client oder eine Anwendung verknüpft sind, wobei die Kontextinformationen aus den erhaltenen Spektrumsdaten geschätzt werden,
wobei die Inhaltszuführungsvorrichtung eine Datenbank enthält, mit einer Vielzahl von Kontextinformationen, einer Vielzahl von gelagerten Spektrumsdaten und ersten Ranglistenwerten zwischen jeder der Vielzahl von Kontextinformationen und jeder der Vielzahl von gelagerten Spektrumsdaten, und
dem Bereitstellen von Inhalten, einschließlich:
dem Berechnen eines zweiten Wertes für die gelagerten Spektrumsdaten im Hinblick auf die erhaltenen Spektrumsdaten; und
dem Ausgeben von Ausgabedaten mit Bewertungen, so dass Inhalt, der mit Kontextinformationen mit einem hohen ersten Ranglistenwert für gelagerte Spektrumsdaten verknüpft ist, für die ein hoher zweiter Wert berechnet wurde, bei einem Kunden in absteigender Reihenfolge einer Gesamtbewertung einschließlich des zweiten Wertes und des ersten Ranglistenwertes wählbar ist.

10. Verfahren nach Anspruch 9,
wobei das Bereitstellen des Inhaltes weiterhin Folgendes beinhaltet:
Erfassen von Informationen über Inhalt welcher vom Kunden aus in den Ausgabedaten enthaltenen Inhalten ausgewählte wurde; und
Hinzufügen der erhaltenen Spektrumsdaten zur Datenbank mit einem ersten Ranglistenwert zu den Kontextinformationen, die mit dem ausgewählten Inhalt verknüpft sind.

11. System nach Anspruch 9 oder 10,
wobei die Datenbank Kennwerte der gelagerten Spektrumsdaten enthält, und
das Berechnen eines Wertes das Zuordnen von zweiten Bewertungen zu Kennwerten, die in den erhaltenen Spektrumsdaten enthalten sind, und das Berechnen des zweiten Wertes aus einem Kennwert mit einer hohen zweiten Bewertung beinhaltet.

12. Verfahren nach Anspruch 11,
wobei die Suchanfrage Peripherieinformationen einschließlich Umgebungsbedingungen enthält, die mit den erhaltenen Spektrumsdaten miterfasst wurden, und
das Berechnen eines Wertes das Korrigieren mindestens eines der Kennwerte der erhaltenen Spektrumsdaten und der Kennwerte der gelagerten Spektrumsdaten gemäß den Peripherieinformationen oder das Auswählen der zu vergleichenden Spektrumsdaten aus den gelagerten Spektrumsdaten beinhaltet.

13. Verfahren nach einem der Ansprüche 9 bis 11,
wobei die Suchanfrage Peripherieinformationen enthält, einschließlich Umgebungsbedingungen, die mit den erhaltenen Spektrumsdaten miterfasst wurden,
die Datenbank Information enthält, die der Vielzahl von Kontextinformationen für mindestens eine der Umgebungsbedingungen Bewertungen zuweist, und
das Ausgeben das Erzeugen der Ausgabedaten beinhaltet, so dass Inhalte, die mit Kontextinformationen verknüpft sind, beim Client in absteigender Reihenfolge der Gesamtbewertung wählbar sind, die weiterhin das Bewerten für die mindestens eine Umgebungsbedingung beinhaltet.

## Revendications

1. Système qui fournit, en réponse à une demande de recherche incluant des données de spectre obtenues auprès d'un capteur, un contenu associé à des informations de contexte, par le biais d'un dispositif client ou d'une application, les informations de contexte étant estimées à partir des données de spectre, le système comprenant :
une base de données incluant une pluralité d'informations de contexte, une pluralité de données de spectre stockées et des premiers scores de classement entre chacune de la pluralité d'informations de contexte et chacune de la pluralité de données de spectre stockées ;
une unité de comparaison qui calcule un second score pour les données de spectre stockées par rapport aux données de spectre obtenues ; et
une unité qui fournit des données de sortie, de sorte que le contenu associé à des informations de contexte avec un premier score de classement élevé pour des données de spectre stockées pour lesquelles un second score élevé a été calculé par l'unité de comparaison peut être sélectionné au niveau d'un dispositif client dans l'ordre décroissant d'une évaluation globale incluant le second score et le premier score de classement.

2. Système selon la revendication 1, comprenant en outre :
une unité acquérant des informations sur un contenu sélectionné par le dispositif client à partir du contenu inclus dans les données de sortie ; et
une unité de mise à jour qui ajoute les données de spectre obtenues au niveau de la base de données avec un premier score de classement aux informations de contexte associées au contenu sélectionné.

3. Système selon la revendication 1 ou 2,
dans lequel la base de données inclut des valeurs caractéristiques des données de spectre stockées ; et
l'unité de comparaison inclut une fonction qui affecte des seconds classements à des valeurs caractéristiques incluses dans les données de spectre obtenues et calcule le second score à partir d'une valeur caractéristique avec un second classement élevé.

4. Système selon la revendication 3,
dans lequel la demande de recherche inclut des informations de périphérie incluant des conditions environnementales acquises avec les données de spectre obtenues ; et
l'unité de comparaison inclut une fonction qui corrige au moins l'une parmi des valeurs caractéristiques des données de spectre obtenues et des valeurs caractéristiques des données de spectre stockées selon les informations de périphérie, ou une fonction de sélection de données de spectre à comparer parmi les données de spectre stockées.

5. Système selon l'une quelconque des revendications 1 à 3,
dans lequel la demande de recherche inclut des informations de périphérie incluant des conditions environnementales acquises avec les données de spectre obtenues ;
la base de données inclut des informations qui affectent des classements à la pluralité d'informations de contexte pour au moins l'une des conditions environnementales ; et
l'unité de fourniture inclut une unité qui génère les données de sortie de sorte que du contenu associé aux informations de contexte peut être sélectionné au niveau du dispositif client dans l'ordre décroissant de l'évaluation globale incluant en outre le classement pour ladite au moins l'une des conditions environnementales.

6. Système selon l'une quelconque des revendications 1 à 5,
dans lequel les données de spectre sont des données produites en mesurant un courant ionique lorsque des molécules de l'objet de mesure sont ionisées et transmises conjointement avec de l'air à travers un intervalle auquel un champ électrique asymétrique est appliqué, et des conditions du champ électrique appliqué sont modifiées.

7. Système selon l'une quelconque des revendications 1 à 6,
dans lequel les informations de contexte incluent des informations connexes à des substances chimiques.

8. Système selon l'une quelconque des revendications 1 à 7,
comprenant en outre une unité qui reçoit la demande de recherche en provenance d'un terminal équipé du capteur, et
dans lequel l'unité de sortie inclut une unité qui transmet les données de sortie au terminal qui est à l'origine de la demande de recherche.

9. Procédé comprenant l'étape consistant à fournir, par un appareil de fourniture de contenu, en réponse à une demande de recherche incluant des données de spectre obtenues auprès d'un capteur, un contenu associé à des informations de contexte, par le biais d'un dispositif client ou d'une application, les informations de contexte étant estimées à partir des données de spectre obtenues ;
l'appareil de fourniture de contenu incluant une base de données incluant une pluralité d'informations de contexte, une pluralité de données de spectre stockées et des premiers scores de classement entre chacune de la pluralité d'informations de contexte et chacune de la pluralité de données de spectre stockées ; et
l'étape de fourniture de contenu incluant les étapes ci-dessous consistant à :
calculer un second score pour les données de spectre stockées par rapport aux données de spectre obtenues ; et
fournir en sortie des données de sortie avec des classements, de sorte que le contenu associé à des informations de contexte avec un premier score de classement élevé pour des données de spectre stockées pour lesquelles un second score élevé a été calculé peut être sélectionné au niveau d'un dispositif client dans l'ordre décroissant d'une évaluation globale incluant le second score et le premier score de classement.

10. Procédé selon la revendication 9,
dans lequel l'étape de fourniture de contenu comprend en outre les étapes ci-dessous consistant à :
acquérir des informations sur un contenu sélectionné par le dispositif client à partir du contenu inclus dans les données de sortie ; et
ajouter des données de spectre obtenues au niveau de la base de données avec un premier score de classement aux informations de contexte associées au contenu sélectionné.

11. Système selon la revendication 9 ou 10,
dans lequel la base de données inclut des valeurs caractéristiques des données de spectre stockées ; et
dans lequel l'étape de calcul d'un score inclut l'étape consistant à affecter des seconds classements à des valeurs caractéristiques incluses dans les données de spectre obtenues et l'étape consistant à calculer le second score à partir d'une valeur caractéristique avec un second classement élevé.

12. Procédé selon la revendication 11,
dans lequel la demande de recherche inclut des informations de périphérie incluant des conditions environnementales acquises avec les données de spectre obtenues ; et
dans lequel l'étape de calcul d'un score inclut l'étape consistant à corriger au moins l'une parmi des valeurs caractéristiques des données de spectre obtenues et des valeurs caractéristiques des données de spectre stockées, selon les informations de périphérie, ou l'étape consistant à sélectionner des données de spectre à comparer parmi les données de spectre stockées.

13. Procédé selon l'une quelconque des revendications 9 à 11,
dans lequel la demande de recherche inclut des informations de périphérie incluant des conditions environnementales acquises avec les données de spectre obtenues ;
la base de données inclut des informations qui affectent des classements à la pluralité d'informations de contexte pour au moins l'une des conditions environnementales ; et
l'étape de fourniture en sortie inclut l'étape consistant à générer les données de sortie de sorte que le contenu associé aux informations de contexte peut être sélectionné au niveau du dispositif client dans l'ordre décroissant de l'évaluation globale qui inclut en outre le classement pour au moins une condition environnementale.
